# EUROPEAN PATENT APPLICATION

(11) **EP 1 132 147 A2**
(43) Date of publication of application: **12.09.2001**
(21) Application number: 01200513.8
(22) Date of filing: 10.02.2000
(51) Int. Cl.: B05D 1/18

(54) **Organic thin films, process for the production thereof and equipment therefor**

(30) Priority: 10.02.1999 JP 3345999; 08.03.1999 JP 6080899
(62) Divisional of application: 00902932.3
(71) Applicant: Matsushita Electric Industrial Co., Ltd., Kadoma-shi, Osaka-fu, 571 (JP)
(72) Inventor: Ootake, Tadashi, Neyagawa-shi, Osaka 572-0816 (JP); Ogawa, Kazufumi, Nara-shi, Nara 630-8101 (JP); Nomura, Takaiki, Katano-shi, Osaka 576-0021 (JP); Tekebe, Takako, Katano-shi, Osaka 576-0054 (JP)
(74) Representative: Dempster, Benjamin John Naftel

(57) **Abstract**

An organic thin film manufacturing method is characterized by including: the film forming step of bringing molecules having a functional group showing reactivity to a functional group having active hydrogen into contact with a base material to be bonded onto the base material, thereby to form a film composed of molecules; and removing step of removing the molecules which are not bonded to the base material using a cleaning agent containing at least one selected from a group of ketone, alkylene glycol and alkoxy alcohol. As a result, an organic thin film manufacturing process, by which an organic thin film with uniform thickness can be formed without using a chlorine-based organic solvent so that a load to environment, is reduced can be provided. Therefore, the industrial significance of the present invention is great.

## Description

### TECHNICAL FIELD

The present invention relates to an organic thin film to be formed on a surface of a base material such as glass or ceramics, a manufacturing method thereof and a manufacturing apparatus thereof. Moreover, the invention relates to a liquid crystal alignment film having an alignment function for liquid crystal, a manufacturing method thereof a manufacturing apparatus thereof, a liquid crystal display device having the liquid crystal alignment film and a manufacturing method thereof.

### BACKGROUND ART

As a method of manufacturing an organic thin film, for example, a method of chemically adsorbing a chlorosilane series surface-active agent on a surface of a base material has been conventionally known. Details of this method are disclosed in, for example, Japanese Unexamined Patent Application Publication No. 3-7913 (1991), Japanese Unexamined Patent Application Publication No. 3-230156 (1991), Japanese Unexamined Patent Application Publication No. 4-330925 (1992), Japanese Patents No. 2, 028, 662, No. 2, 598, 867 and No. 2,638,446.

In the methods disclosed in the above publications, after film forming molecules are adsorbed and fixed onto a surface of a base material, a cleaning step of removing non-adsorbed molecules is executed, but the cleaning in this cleaning step is executed to a proper degree so that a monomolecular film which is a super-thin film can be formed.

In such cleaning, chloroform has been conventionally used as a cleaning agent at the cleaning steps disclosed in the above publications. This is because chloroform has the following two remarkable features. Namely:1. a dissolving power for organic compound is large; and 2. since a boiling point is low, i.e., 61°C, chloroform can be easily removed by evaporation.

However, it is known that the chloroform is highly toxic. Moreover, it is also known that the chloroform is a cause of breaking the ozone layer, and this substance put too much load on the environment.

On the other hand, for example, Japanese Unexamined Patent Application Publication Nos. 6-45142 (1994), 6-187692 (1994), 6-312477 (1994) and the like disclose ether, lactone, ester, nitril, amide and the like as a substitute cleaning agent for chloroform. However, these cleaning agents are open to question in a cleaning power. Actually these substitute cleaning agents are not used, and they are not excellent.

Accordingly, it is desired that a process for manufacturing an organic thin film using a substitute cleaning agent having the cleaning power equivalent to that of a chlorine-based solvent without a load onto the environment is established.

### DISCLOSURE OF THE INVENTION

A group of the present invention has been devised in order to solve the above problems in the prior arts, and its first object is to provide a method of manufacturing an organic thin film including a removing step using a cleaning agent other than a chlorine-based solvent, an organic thin film which is deposited by this method, and a manufacturing method to be used in this method.

Further, a group of the present invention has been devised in order to solve the problems in the prior arts, and its second object is to provide a method of manufacturing a liquid crystal alignment film including a removing step using a cleaning agent other than a chlorine-based solvent, a liquid crystal alignment film which is deposited by this method, and a manufacturing apparatus to be used in this method.

Further, its third object is to provide a liquid crystal display device having the liquid crystal alignment film, and a manufacturing method thereof.

### [Organic Thin Film, Manufacturing Method Thereof and Manufacturing Apparatus Thereof]

The inventors of the present invention have devoted themselves to examine an organic thin film manufacturing method. As a result, when an organic thin film, which is structured by coupling molecules to a surface of a base material, is cleaned or the like by a cleaning agent containing ketone, alkylene glycol or alkoxy alcohol, the molecules which are not coupled to the base material can be removed. Therefore, the inventors found out that this case provides the effect similar to that in the case where cleaning is executed by using a cleaning agent of a chlorine-based solvent, and completed the present invention.

### (1) Organic thin film

In order to solve the above problems, an organic thin film of the present invention composed of molecules bonded to a base material, is characterized in that the organic thin film is obtained so that after molecules having a functional group showing reactivity to a functional group having active hydrogen is brought into contact with and bonded to a surface of the base material, the molecules which are not bonded to the base material are removed by a cleaning agent which contains at least one selected from a group of ketone, alkylene glycol and alkoxy alcohol.

The organic thin film having the above structure is composed of molecules which is arranged along the surface of the base material in a state that one end of the thin film is bonded to the surface of the base material and the other end is projected to a direction separating from the surface of the base material. The organic thin film, which is constituted so that the molecules not bonded to the base material (hereinafter, occasionally referred as unfixed molecules) are removed by the cleaning agent, can obtain a uniform film structure without a state that molecules are disordered on the base material.

In addition, the functional group showing reactivity to the functional group having active hydrogen can be one functional group selected from the functional groups represented by the following general formulas (1). 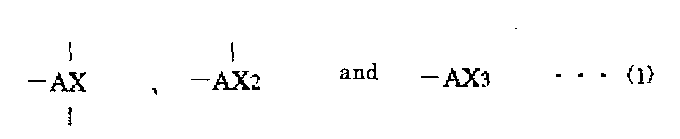 (In the formulas, A shows one kind of atom selected from a group composed of silicon, germanium, tin, titanium and zirconium. X shows one functional group selected from halogen, alkoxy group and isocyanate group.)
Here, "on the base material" is not limited to the case where the molecules are directly fixed to the surface of the base material, and includes a case where the molecules are fixed via another substance layer.

### (2) Organic Thin Film Manufacturing Method

In order to solve the above problems, an organic thin film manufacturing method of the present invention is characterized by comprising: the film forming step of bringing molecules having a functional group showing reactivity to a functional group having active hydrogen into contact with a base material so as to be bonded onto the base material and forming a film composed of the molecules: and the removing step of removing the molecules which are not bonded onto the base material using a cleaning agent which contains at least one selected from a group of ketone, alkylene glycol and alkoxy alcohol.

The molecules can have a functional group selected from the functional groups represented by the following general formulas (1). 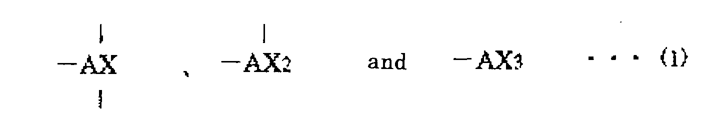 (In the equation, A shows one kind of atom selected from a group composed of silicon, germanium, tin, titanium and zirconium. X shows one kind of a functional group selected from halogen, alkoxy group and isocyanate group.)

When the molecules having one functional group selected from the functional groups represented by the above general formulas (1) are fixed to the surface of the base material so that a film is formed at the film forming step, the molecules which are not bonded to the base material (unfixed molecules) remain on the surface of the film. The unfixed molecules can be easily removed by using the cleaning agent which contains at least one selected from a group of ketone, alkylene glycol and alkoxy alcohol. This is because the ketone or the like has excellent dissolving power with respect to unfixed molecules. As a result, at least an organic thin film with uniform thickness composed of the molecules are formed on the surface of the substrate so that an organic thin film with uniform thickness can be manufactured.

As the ketone, at least one kind of compound selected from a group of acetone, methyl ethyl ketone, diethyl ketone, methyl isobutyl ketone and acetylacetone can be used.

The group of these compounds have excellent dissolving power with respect to molecules having one functional group selected from the functional groups represented by the above general formulas (1). Therefore, according to the above method using the group of compounds with excellent cleaning power, suitable ketone is selected as the need arises according to a type of the molecules and cleaning conditions so that an organic thin film with uniform thickness where the unfixed molecules are removed can be formed.

In addition, as the alkylene glycol, polyethylene glycol can be used.

The polyethylene glycol has excellent dissolving power with respect to the compound having at least one functional group selected from the functional groups represented by the above general formulas (1). Therefore, according to the above method using polyethylene glycol with excellent cleaning power, unfixed molecules can be removed more easily so that an organic thin film from which the unfixed molecules are removed can be formed.

Further, a molecular weight of the polyethylene glycol can be within a range of not less than 100 to not more than 300.

As a result, since polyethylene glycol with low molecular weight is used as the component of the cleaning agent, a cleaning agent with small viscosity and excellent handing property can be obtained.

Further, as the cleaning agent, one which does not include a chlorine-based solvent can be used.

As mentioned above, when the cleaning agent, which contains at least one selected from a group of ketone, alkylene glycol and alkoxy alcohol and does not include a chlorine-based solved, is used at the removing step, a load to environment can be suppressed. Furthermore, since this cleaning agent displays the cleaning effect equivalent to that of a conventional cleaning agent composed of a chlorine-based solvent for an object to be cleaned, namely, unfixed molecules, an organic thin film with uniform thickness can be formed. Therefore, an organic thin film with uniform thickness can be formed without using a chlorine-based solvent, and an organic thin film manufacturing process in which a load to environment is suppressed can be provided.

Further, after the removing step, the cleaning agent removing step of removing the cleaning agent adhering to the base material can be carried out.

As a result, the cleaning agent remains on the formed organic thin film so that a bad influence can be prevented from being exerted on the quality of the film. Particularly in the case where a functional film having functions such as water-repellent effect and hydrophilic nature is used, when the cleaning agent removing step is carried out, various functional deteriorations can be prevented.

The cleaning agent removing step may include the rinse step of rinsing off the cleaning agent adhering to the base material with water, and the drying step of drying the water adhering to the base material.

This method can clean the cleaning agent adhering to the film formed on the surface of the base material with water so as to remove it. As a result, for example, in the case where the molecules have AX group, a condensation reaction takes place between the AX group remaining on the film and water, and hydroxyl group can be introduced into the molecules composing the film. Moreover, when the base material is dried at the drying step, water adhering to the base material can be removed. On the other hand, when the drying step is carried out, dehydration reaction is activated between the bonded molecules on the surface of the base substrate so that a crosslinked structure can be obtained. Therefore, an organic thin film having excellent abrasion resistance, resistance to scratch and the like can be manufactured.

As the base material, a base material where a functional group having active hydrogen exists on its surface can be used.

According to the above method, in the case where the molecules have a functional group represented by the above general formulas (1), HX molecules are eliminated so that condensation reaction can be caused. As a result, the molecules having a functional group represented by the general formulas (1) can be bonded to the surface of the base material.

Further, the film forming step and the removing step can be carried out in dry atmosphere.

When the film forming step is carried out in dry atmosphere, a monomolecular film if formed on the surface of the base material, and an accumulated film where a plurality of monomolecular film-like molecular layers are accumulated is formed on the monomolecular film. This is because the moisture in atmosphere reacts to the functional group represented by the above general formulas (1) and crosslinking is prevented. Since the removing step is carried for the film formed in such a manner in dry atmosphere, the whole accumulated film or some molecular layers of the accumulated film can be removed easily. This is because since the removing step is carried out also in dry atmosphere, the condensation reaction due to elimination of HX molecules can be prevented from taking place between the functional group represented by the above general formulas (1) in the molecules forming the accumulated film and the moisture in atmosphere. Therefore, the molecules which are fixed to the surface of the base material or unfixed molecules are can be prevented from crosslinking, and an organic thin film where a plurality of monomolecular films or monomolecular film-like molecular layers are accumulated can be formed.

The molecules having one functional group selected from the functional groups represented by the above general formulas (1) are fixed to become monomolecular film like so that an organic thin film can be formed.

According to the above method, since a monomolecular film-shaped organic thin film can be formed, a molecule design of the molecules having the functional group represented by the above general formulas (1) is controlled so that a film thickness can be easily controlled at molecule level. As a result, a very thin organic thin film can be manufactured so as to have a desired thickness.

### (3) Organic Thin Film Manufacturing Apparatus

In order to solve the above problems, an organic thin film manufacturing apparatus of the present invention, is characterized by comprising: film forming means for bringing molecules having a functional group showing reactivity to a functional group having active hydrogen into contact with a base material so as to be bonded onto a surface of the base material and forming a film composed of the molecules; and removing means for removing the molecules which are not bonded onto the base material using a cleaning agent containing at least one selected from a group of ketone, alkylene glycol and alkoxy alcohol.

The molecules have one functional group selected from the functional groups represented by the following general formulas (1). 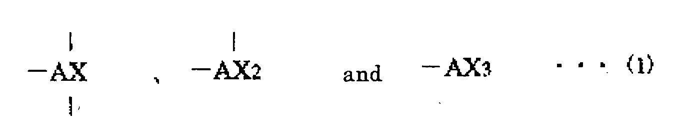 (In the equation, A shows one kind of atom selected from a group composed of silicon, germanium, tin, titanium and zirconium. X shows one functional group selected from halogen, alkoxy group and isocyanate group.)

### [Liquid Crystal Alignment Film, Manufaturing Method Thereof and Manufacturing Apparatus Thereof]

### (1) Liquid crystal Alignment film

In order to solve the above problems, a liquid crystal alignment film of the present invention, which is composed of molecules bonded onto a substrate and where liquid crystal molecules being aligned in a specified direction, the is characterized in that the liquid crystal alignment film is obtained so that after molecules having a functional group showing reactivity to a functional group having active hydrogen are brought into contact with a surface of the substrate to be bonded thereto, the molecules which are not bonded to the substrate are removed by a cleaning agent containing at least one selected from a group of ketone, alkylene glycol and alkoxy alcohol.

The liquid crystal alignment film having the above structure is composed of molecules which are arranged along the surface of the base material in a state that one end of the thin film is bonded to the surface of the base material and the other end is projected to a direction separating from the surface of the base material. Since this alignment film is a thin film which is cleaned by the above cleaning agent, unfixed molecules which are not bonded to the substrate are removed so that an uniform thickness can be obtained.

In addition, conventionally, when the substrate to which molecules are fixed is cleaned by a cleaning agent (chlorine-based cleaning agent) composed of a chlorine-based solvent, a film structure is occasionally such that the molecules are fixed in a disordered state. On the contrary, since the liquid crystal alignment film having the above structure is not a thin film which is cleaned by the cleaning agent composed of a chlorine-based solvent, a film structure that molecules are fixed to the substrate in disordered state is prevented so that an organic thin film having an ordered film structure where the molecules are arranged uniformly can be provided.

Here, in the case where the liquid crystal alignment film having the above structure is a monomolecular film, liquid crystal molecules in its vicinity are inclined with respect to the substrate and/or restricted to an alignment direction.

Therefore, as mentioned above, the ordered film structure that individual molecules are aligned uniformly has excellent alignment performance, and more concretely liquid crystal molecules can be aligned without disordering the alignment state.

Here, "on the substrate" is not limited to the case where the molecules are directly bonded to the surface of the substrate, and includes the case where the molecules are bonded via another substance layer such as an electrode.

In addition, the functional group showing reactivity a functional group having active hydrogen can be one functional group selected from the functional groups represented by the following general formulas (1). 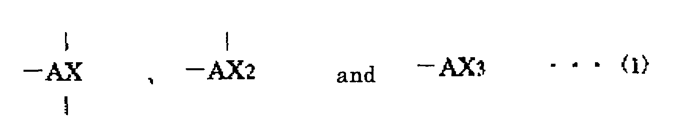 (In the equation, A shows one kind of atom selected from a group composed of silicon, germanium, tin, titanium and zirconium. X shows one functional group selected from halogen, alkoxy group and isocyanate group.)

### (2) Liquid crystal alignment film manufacturing method

In order to solve the above problem, a liquid crystal alignment film manufacturing method of the present invention is characterized by comprising: film forming step of bringing molecules having a functional group showing reactivity to a functional group having active hydrogen into contact with a substrate to be bonded onto a surface of the substrate and forming a film composed of the molecules; and removing step of removing the molecules which are not bonded to the substrate using a cleaning agent containing at least one selected from a group of ketone, alkylene glycol and alkoxy alcohol.

The molecules can have one functional group selected from the functional groups represented by the following formulas (1). 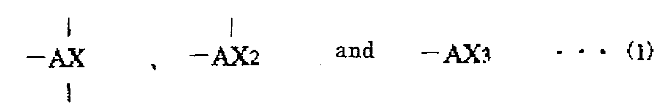 (In the equation, A shows one kind of atom selected from a group composed of silicon, germanium, tin, titanium and zirconium. X shows one functional group selected from halogen, alkoxy group and isocyanate group.)

When the molecules having one functional group selected from the functional groups represented by the above general formulas (1) are fixed to the surface of the substrate so that the film is formed at the film forming step, unfixed molecules remains on the surface of the film. Since ketone or the like displays excellent dissolving power with respect tot he unfixed molecules, the unfixed molecules are cleaned by the above cleaning agent so as to be capable of being removed easily. Therefore, at least a liquid crystal alignment film composed of the molecules fixed onto the substrate can be formed on the surface of the substrate while a load to environment is being suppressed. Further, the liquid crystal alignment film formed in the above method has a uniform thickness and a film structure that the molecules are not disordered and are uniform.

### (3) Liquid crystal alignment film manufacturing method

In order to solve the above problems, a liquid crystal alignment film manufacturing apparatus of the present invention is characterized by comprising: film forming means for bringing molecules having a functional group showing reactivity to a functional group having active hydrogen into contact with a substrate to be bonded to a surface of the substrate and forming a film composed of the groups of molecule; and removing means for removing the molecules which are not bonded to the substrate using a cleaning agent containing at least one selected from a group of ketone, alkylene glycol and alkoxy alcohol.

The molecules can have one functional group selected from the functional groups represented by the following general formulas (1). (In the equation, A shows one kind of atom selected from a group 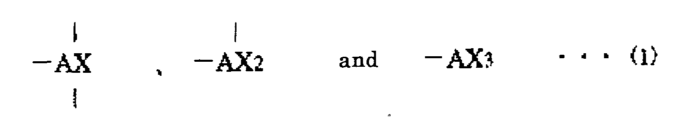 composed of silicon, germanium, tin, titanium and zirconium. X shows one functional group selected from halogen, alkoxy group and isocyanate group.)

### [Liquid Crystal Display Device and Manufacturing Method Thereof]

### (1) Liquid crystal display device

In order to solve the above problems, a liquid crystal display device of the present invention having a liquid crystal alignment film, in which the liquid crystal alignment film is constituted so that liquid crystal molecules are aligned on a substrate in a predetermined direction, is characterized in that: the liquid crystal alignment film is a thin film which is constituted so that molecules having a functional group showing reactivity to a functional group having active hydrogen are bonded onto the substrate, and after a group of the molecules are brought into contact with to be bonded to the substrate, the molecules which are not bonded to the substrate are removed by a cleaning agent containing at least one selected from a group of ketone, alkylene glycol and alkoxy alcohol.

Since the liquid crystal alignment film of the liquid crystal display device with the above structure is a thin film cleaned by the above cleaning agent, the molecules which are not bonded to the substrate are removed so that the thin film has a uniform thickness. Moreover, since the liquid crystal alignment film is not a thin film cleaned by a conventional cleaning agent composed of a chlorine-based solvent, it has the ordered film structure that the molecules are aligned uniformly. Therefore, liquid crystal molecules can be aligned without disorder of the alignment state. Namely, due to the provision of the above-mentioned liquid crystal alignment film, alignment defect or the like of the liquid crystal is not visually recognized and display quality is excellent in the liquid crystal display device having the above structure.

### (2) Liquid crystal display apparatus manufacturing method

In order to solve the above problems, a liquid crystal display device manufacturing method of the present invention, where the liquid crystal display device has the liquid crystal alignment film which is constituted so that liquid crystal molecules are aligned on a substrate in a predetermined direction, is characterized by comprising: film forming step of bringing molecules having a functional group showing reactivity to a functional group having active hydrogen into contact with the substrate to be bonded onto a surface of the substrate and forming a film composed of the molecules; and removing step of removing the molecules which are not bonded to the substrate using a cleaning agent containing at least one selected from a group of ketone, alkylene glycol and alkoxy alcohol.

According to the above method, a liquid crystal display device having a liquid crystal alignment film with uniform thickness and excellent alignment performance can be manufactured. Namely, when the above cleaning agent is used as a substitute cleaning agent of a chlorine-based cleaning agent, a liquid crystal display device with excellent display quality can be manufactured while a load to environment is being suppressed.

Another objects, features and advantages of the present invention will be sufficiently understood by the following description. Moreover, the advantages of the present invention are clarified by the following description with reference to attached drawings.

### BRIEF DESCRIPTION OF THE DRAWINGS

Fig. 1 is a flow chart showing an organic thin film manufacturing process according to an embodiment of the present invention.

Fig. 2 is a flow chart for explaining a first cleaning agent removing method according to a cleaning agent removing step in the organic thin film manufacturing process.

Fig. 3 is a flow chart for explaining a second cleaning agent removing method according to the cleaning agent removing step in the organic thin film manufacturing process.

Fig. 4 is an enlarged diagram of a main section schematically showing a state that the organic thin film is adsorbed onto a base material.

Figs. 5 are cross sections schematically showing a state that the organic thin film is adsorbed onto the base material: Fig. 5(a) is a diagram showing a state that adsorbed molecules are adsorbed in a layer form; and Fig. 5(b) is a diagram showing a state that the adsorbed molecules are adsorbed onto the base material while being interlaced.

Figs. 6 are enlarged diagrams of the main section schematically showing a state that the organic thin film is adsorbed onto the base material: Fig. 6(a) is a diagram showing a state that hydroxyl group is introduced into the adsorbed molecules; and Fig. 6(b) is a diagram showing a state that the adsorbed molecules crosslink.

Figs. 7 are explanation diagrams schematically showing an organic thin film manufacturing apparatus according to the present invention: Fig. 7(a) shows a case where film forming means and film removing means are closed system; Fig. 7(b) shows a case where they are independent system; and Fig. 7(c) schematically shows cleaning agent removing means.

Figs. 8 are perspective views schematically showing removing means according to the present invention: Fig. 8(a) shows a case of a batch processing system; and Fig. 8(b) shows a case of a flow processing system.

Fig. 9 is a cross section showing a liquid crystal display device according to the present invention.

Fig. 10 is an enlarged diagram of a main section schematically showing a monomolecular film according to an embodiment 1-1 of the present invention.

Fig. 11 is a spectrum diagram of FT-IR of the monomolecular film according to the embodiment 1-1.

Fig. 12 is a spectrum diagram of FT-IR of a monomolecular film according to a comparative example 1-1.

Fig. 13 is an enlarged diagram of a main section schematically showing a monomolecular film according to an embodiment 1-3 of the present invention.

Fig. 14 is a spectrum diagram of FT-IR of the monomolecular film according to the embodiment 1-3.

Fig. 15 is a spectrum diagram of FT-IR of the monomolecular film according to a comparative example 1-2.

Fig. 16 is a spectrum diagram of FT-IR of the monomolecular film according to a comparative example 1-4.

Fig. 17 is a spectrum diagram of FT-IR of the monomolecular film according to a comparative example 1-5.

Fig. 18 is an enlarged diagram of a main section schematically showing the monomolecular film according to an embodiment 2-1 of the present invention.

Fig. 19 is a spectrum diagram of FT-IR of the monomolecular film according to the embodiment 2-1.

Fig. 20 is a spectrum diagram of FT-IR of the monomolecular film according to a comparative example 2-1.

Fig. 21 is an enlarged diagram of a main section schematically showing the monomolecular film according to an embodiment 2-2 of the present invention.

Fig. 22 is a spectrum diagram of FT-IR of the monomolecular film according to the embodiment 2-2.

Fig. 23 is a spectrum diagram of FT-IR of the monomolecular film according to a comparative example 2-2.

Fig. 24 is a spectrum diagram of FT-IR of the monomolecular film according to an embodiment 2-3 of the present invention.

Fig. 25 is a spectrum diagram of FT-IR of the monomolecular film according to a comparative example 2-3.

Fig. 26 is a spectrum diagram of FT-IR of the monomolecular film according to a comparative example 2-4.

### BEST MODE FOR CARRYING OUT THE INVENTION

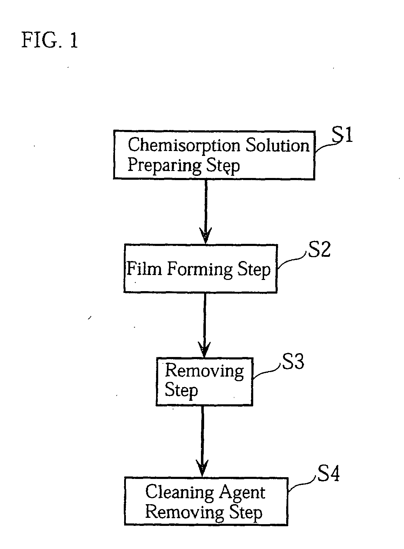

There will be explained below embodiments of the present invention with reference to Figs. 1 through 8. Here, portions which requires no explanation is omitted, and enlarged or reduced portions are shown in the drawings in order to simplify the explanation. This is applicable to the other drawings.

An organic thin film manufacturing method according to the present invention is characterized by including: a film forming step of bringing molecules having a functional group showing reactivity to a functional group having active hydrogen into contact with a base material to be fixed onto a surface of the base material and forming a film composed of the molecules; and a removing step of removing the molecules which are not fixed to the base material using a cleaning agent including at least selected one kind of ketone, alkylene glycol and alkoxy alcohol.

Here, the molecules can be molecules having one functional group selected from the functional groups represented by the following general formulas (1). 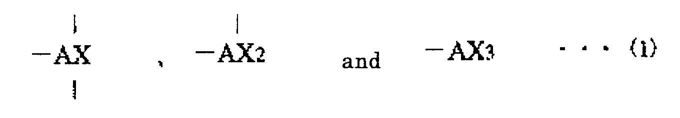 (in the formulas, A shows one kind of atom selected from a group composed of silicon, germanium, tin, titanium and zirconium. X shows one functional group selected from halogen, alkoxy group and isocyanate group.)

Further, examples of the halogen is F, Cl, Br and I, but Cl is preferable from a viewpoint of reactivity to the base material.

The molecules having the functional group represented by the above general formulas (1) are composed by bonding the following functional groups to the functions group represented by the general formulas (1).
(a) hydrocarbon group such as methyl group, ethyl group, n-propyl group, n-butyl group, n-pentyl group, n-hexyl group, n-heptyl group, n-octyl group, n-nonyl group, n-decyl group, n-undecyl group, n-dodecyl group, n-tridecyl group, n-tetradecyl group, n-pentadecyl group, n-hexadecyl group, n-heptadecyl group, n-octadecyl group, n-nonadecyl group, n-eicocyl group or phenyl group.
(b) hydrocarbon group that a part of the hydrocarbon group includes carbon-carbon double bond or carbon-carbon triple bond.
(c) functional group that hydrogen in the hydrocarbon group in (a) and (b) is substituted by another functional group (for example, methyl group, halogenated methyl group, hydroxyl group, cyano group, amino group, imino group, carboxyl group, ester group, thiol group, aldehyde group or the like) and/or atom (for example, F, Cl, Br, I or the like).
(d) functional group that a part of C-C bond in the hydrocarbon group in (a) and (b) is substituted by C-O-C (ether) bond, C-CO-C (carbonyl) bond or C = N bond.
Here, in the present invention, the functional group which is bonded to the functional group represented by the general formulas (1) is not limited to the above-mentioned ones.

There will be detailed below an organic thin film manufacturing method according to the present invention with reference to Fig. 1. At first, an adsorption liquid that molecules having the functional group represented by the general formulas (1) (hereinafter, occasionally referred to as adsorption molecule or molecule) are dissolved in a nonaqueous organic solvent is prepared (chemisorption solution preparing step, S1). It is preferable that this chemisorption solution is prepared in a drying atmosphere that a relative humidity is within a range of not more than 35%, for example, in dry air, dry nitrogen or dry helium.

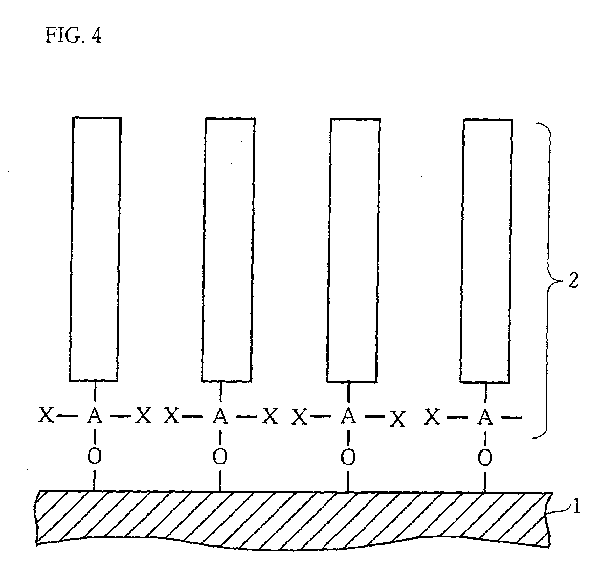

Next, when the chemisorption solution prepared at the chemisorption solution preparing step is brought into contact with a base material 1 degreased by previously cleaning it well (a film forming step, S2), the molecules having the functional group represented by the general formulas (1) are chemically adsorbed and fixed onto a surface of the base material 1 (see Fig. 4). More specifically, condensation reaction takes place between the molecules having the functional group represented by the general formulas (1) and a functional group having active hydrogen existing on the surface of the base material. For example, in the case where the adsorbed molecules are molecules having -AX₃ group and the functional group having active hydrogen is hydroxyl group, a reaction represented by the following chemical equation (2) takes place. 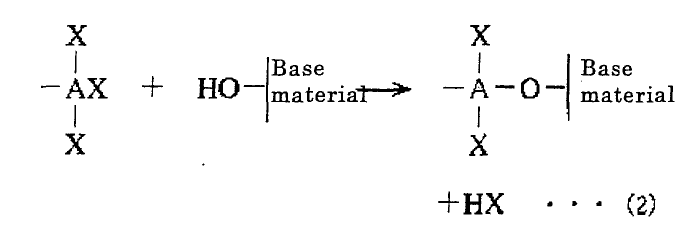 (In the equation, A shows one kind of atom selected from a group composed of silicon, germanium, tin, titanium and zirconium. X shows one functional group selected from halogen, alkoxy group and isocyanate group.)

As a result of the condensation reaction, molecules, where HX is eliminated and which have the functional group represented by the general formulas (1), are adsorbed onto the surface of the base material 1. Here, the degreasing is executed in order to improve adherability of the chemisorption solution to the surface of the base material 1, and surface treatment may be conducted using a conventionally-known method.

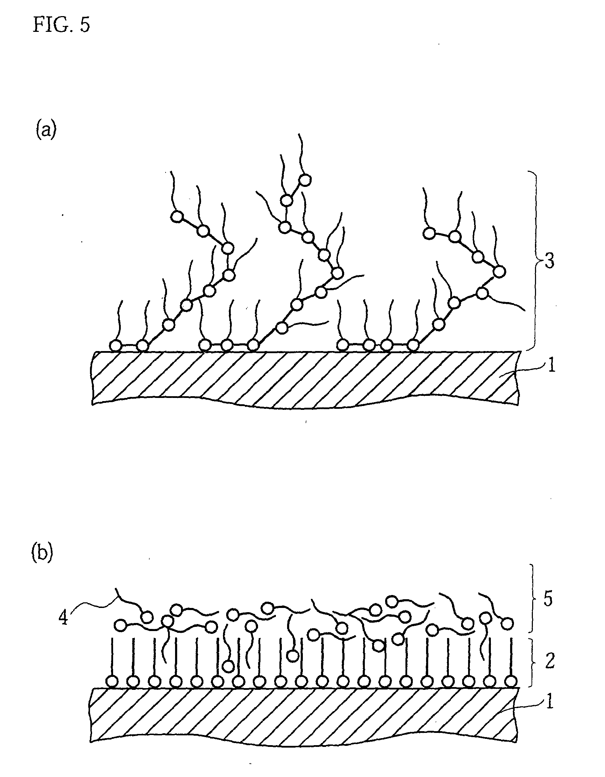

Here, when the film forming step is carried out in an atmosphere of normal humidity (namely, in the air), a thin film 3 shown in Fig. 5(a) is formed on the surface of the base material 1. More specifically, adsorbed molecules which are adsorbed onto the surface of the base material 1 are bonded to non-adsorbed molecules which are not adsorbed onto the base material 1, and another non-adsorbed molecules are bonded to the above non-adsorbed molecules so that a chain is formed, and a polymer-like structure is formed. This chain bends so as to extend upward (into air) from the surface of the base material 1 and interlaces with another bent chain three-dimensionally so that the thin film 3 is formed. The thin film 3 having such a film structure is formed because of the following reasons. Namely, the non-adsorbed molecules which are not adsorbed onto the surface of the base material 1 react to moisture in the atmosphere so that HX molecules are eliminated. As a result, OH group is introduced into the non-adsorbed molecules. The OH group reacts or the like to the functional group (adsorbed portion) represented by the general formulas (1) in another non-adsorbed molecules so as to crosslink. Therefore, the thin film having the above structure is formed. Here, a thickness of the thin film shown in the drawing is such that three monomolecular films composed of adsorbed molecules are laminated, and in this case, this film is referred to as three-molecular layer for the convenience. Meanwhile, when the film forming step is carried out in a dry atmosphere (for example, relative humidity is not more than 35%), as shown in Fig. 5(b), a monomolecular film 2 is formed on the surface of the base material 1, and non-adsorbed molecules 4 adhere to the surface of the monomolecular film 2 so that a thin film is formed. This is because the adsorbed portion in the non-adsorbed molecules 4 does not react to moisture due to the dry atmosphere and adhere to base material in a state that it has the functional group represented by the general formulas (1).

The method of bringing the molecules having the functional group represented by the general formulas (1) into contact with the surface of the base material 1 is not particularly limited, and for example, a method of soaking the base material 1 in an chemisorption solution previously prepared, a method of applying the chemisorption solution to the base material 1 or the like can be used.

In addition, as the functional group having active hydrogen existing on the surface of the base material 1, in addition to the hydroxyl group, for example, carboxyl group, sulfinic acid group, sulfonic acid group, phosphoric acid group, phosphorous acid group, thiol group, amino group and the like can be enumerated. Furthermore, a functional group that the active hydrogen of the above functional group is substituted by alkali metal or alkali earth metal may be used. Moreover, in the case where the functional group having active hydrogen does not exist on the surface of the base material 1 or few functional group exist, a compound oxidizing agent treatment such as an UV/ozone treatment, an oxygen plasma treatment or potassium permanganate solution is given. As a result, it is preferable that the surface of the base material 1 is reformed and the above functional group is introduced, or a number of the functional group is increased.

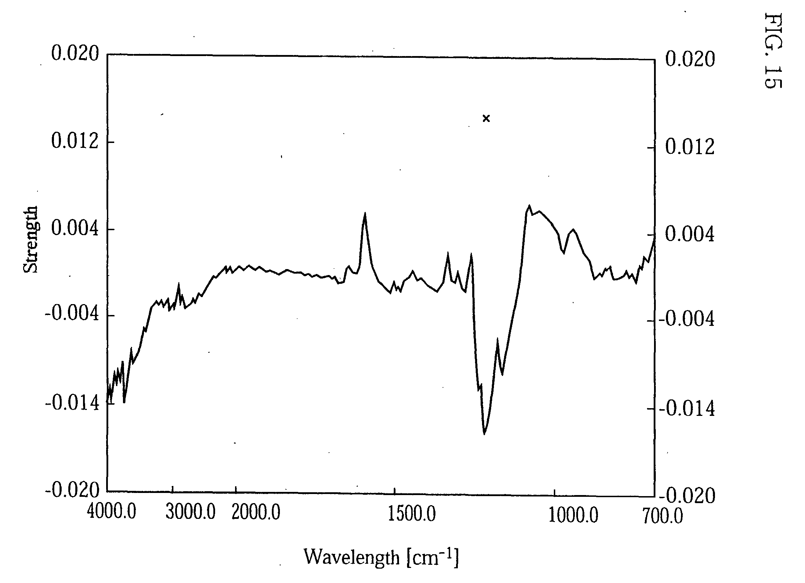

Next, a removing step is carried out (S3) using a cleaning agent containing at least one kind selected from a group of ketone, alkylene glycol and alkoxy alcohol. A main object to be cleaned at this step is groups of non-adsorbed molecules of the molecules having a functional group represented by the general formulas (1) which is not fixed by chemical linkage and remains on the surface of the base material 1. More specifically, in Fig. 5(a), the object to be cleaned is not the base material 1 but the non-adsorbed molecules which are bonded to adsorbed molecules as constitutional molecules in a network-like molecular layer 3 formed on the base material 1. Moreover, in Fig. 15(b), the object to be cleaned is an accumulated film 5 composed of the non-adsorbed molecules 4 adhering to the surface of the monomolecular film 2. The groups of non-adsorbed molecules are dissolved in the cleaning agent so as to be removed, and a monomolecular film-like organic thin film having uniform thickness can be formed.

The ketone as cleaning component contained in the cleaning agent has excellent solubility with respect to the molecules having a functional group represented by the general formulas (1). Examples of the ketone are acetone, methyl ethyl ketone, diethyl ketone, methyl isobutyl ketone and acetylacetone.

In addition, examples of the alkylene glycol as cleaning component contained in the cleaning agent are ethylene glycol group, propylene glycol group and butylene glycol group. The ethylene glycol group is the most preferable of all. The ethylene glycol group has less stench and no color, and is characterized in that it easily blends with various organic solvents, water, surface-active agents and the like. Therefore, the ethylene glycol group is convenient to a design of the cleaning agents. More concretely, the ethylene glycol group, for example, ethylene glycol monoethyl ether, diethylene glycol monoethyl ether, diethylene glycol monoethyl ether acetate, ethylene glycol monoethyl ether acetate, ethylene glycol monomethyl ether, ethylene glycol monomethyl ether acetate, ethylene glycol mono-n-butyl ether, ethylene glycol monophenyl ether and the like can be used preferably.

Further, examples of the alkylene glycol may be polymers such as polyethylene glycol group, polypropylene glycol group, polybutylene glycol group. More specifically, as the polyethylene glycol group, for example, polyethylene glycol, polyethylene glycol monoethyl ether, polydiethylene glycol monoethyl ether, polydiethylene glycol monoethyl ether acetate, polyethylene glycol monoethyl ether acetate, polyethylene glycol monomethyl ether, polyethylene glycol monomethyl ether acetate, polyethylene glycol mono-n-butyl ether polyethylene glycol monophenyl ether and the like can be used suitable.

In the case where the alkylene glycol is polymer, it is preferable its molecular weight is about not more than 2,000, more preferably it is within a range of 100 to 300. In the case where the molecular weight is larger than 2,000, viscosity becomes too large so that its handling property is deteriorated. Here, in the case where polymer whose molecular weight is about not less than 300, it is the most suitable for the cleaning agent that the polymer is dissolved in water, alcohol or the like and it is used as a solution. For example, in the case where polyethylene glycol is used as polymer and it is dissolved in water, it is preferable density of polyethylene glycol is about 10 to 50 wt%. Meanwhile, in the case where polyethylene glycol is dissolved in alcohol, it is preferable that the density is about 10 to 50 wt%.

On the other hand, the alkoxy alcohol is not particularly limited, and concretely, its examples are methoxy alcohol and ethoxy ethanol.

The cleaning agent of the present invention may be a nonaqueous cleaning agent in which one of ketone, alkylene glycol and alkoxy alcohol is used solely. The removing step may be carried out in a dry atmosphere (relative humidity: not more than 35%). For example, in the case where the film where the accumulated film 5 is formed on the monomolecular film 2 shown in Fig. 5(a) is cleaned, due to the dry atmosphere, it is prevented that elimination reaction of HX molecule takes place between moisture in the atmosphere and the functional group represented by the general formulas (1) in the non-adsorbed molecules 4 and crosslinking occurs. Therefore, the accumulated film 5 can be removed by the detergent action of the cleaning agent so that a monomolecular film-like organic thin film can be formed. Moreover, in the case where the removing step is carried out in the dry atmosphere, a cleaning agent having low moisture content is preferably used. More concretely, when the moisture content is less than 1.0%, there arises no practical problem, but about less than 0.1% is preferable, and about less than 0.01% is more preferable. When the moisture content exceeds the above numerical value range, since AX group in the non-adsorbed molecules and adsorbed molecules reacts to water contained in the cleaning agent so that a crosslinking structure is formed, a monomolecular film cannot be formed also in this case.

Examples of the concrete cleaning method executed at the removing step are a method of silently soaking the base material 1 in a cleaning tank filled with the cleaning agent as well as a method of applying a mechanical force to the base material 1 which is being soaked in the cleaning agent such as emitting a ultrasonic wave thereto, and a method of heating the cleaning agent in order to improve the cleaning power of the cleaning agent. Here, in the case where a stress of the ultrasonic wave or the like is applied to the base material 1, it is necessary that the stress does not exert a bad influence on the base material 1.

In addition, the cleaning conditions of the removing step are not particularly limited, they may be set properly as the need arises considering (a degree of adhesion of the non-adsorbed molecules to the object to be cleaned), a material of the object to be cleaned, form of the object to be cleaned and a bad influence on the thereafter steps. Further, when concentration of the cleaning agent, cleaning time and a number of cleaning times are changed, not only the monomolecular film-like organic thin film but also an organic thin film having a thickness equivalent to that of two molecular layers can be formed. Namely, a film thickness can be controlled. That is, a remaining degree of the non-adsorbed molecules is controlled so that the film thickness is controlled. For example, about three cleaning tanks filled with the cleaning agent with predetermined concentration are provided, and cleaning is executed in the respective cleaning tanks for predetermined time so that a degree of the cleaning is improved. As a result, most of the non-adsorbed molecules are removed, and a monomolecular film-like organic thin film can be obtained. On the other hand, in the case where about one cleaning tank is provided and the cleaning is executed for shorter time than the predetermined time, namely, light cleaning is executed, a lot of non-adsorbed molecules remain. When the base material 1 is exposed to the air in such a state, the non-adsorbed molecules react to moisture in the air to be fixed, and for example, an organic thin film with a thickness equivalent to that of several molecular layers such as two-molecular layer is formed.

Furthermore, in order to control the thickness of the organic thin film formed into a monomolecular film form, a molecular design of adsorbed molecules to be allowed to adhere to the base material 1 is changed so that a thickness can be controlled accurately.

Next, after the removing step, a cleaning agent removing step of removing a cleaning agent may be carried out (S4). This cleaning agent removing step is mainly divided into a first cleaning agent removing method of rinsing a cleaning agent using a rinse agent and a second cleaning agent removing method of drying a cleaning agent to be evaporated. The first cleaning agent removing method can be adopted to the case where the cleaning agent contains at least one of ketone, alkylene glycol and alkoxy alcohol. On the other hand, the second cleaning agent removing method can be mainly adopted to the case where the cleaning agent contains ketone.

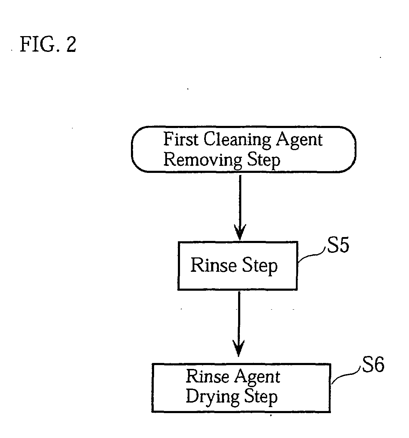

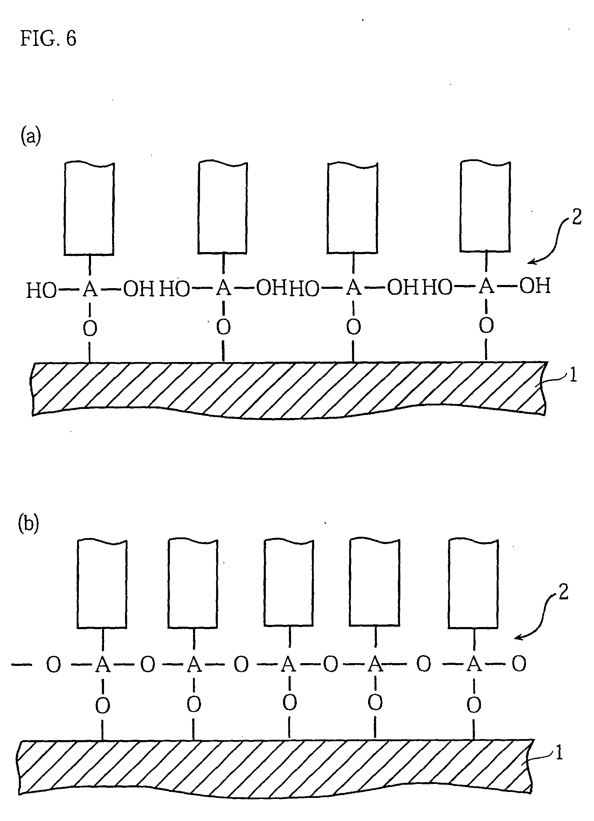

The first cleaning agent removing method is composed of the rinse step of rinsing the cleaning agent using a rinse agent (S5), and the rinse agent drying step of evaporating the rinse agent to remove it (S6) (see Fig. 2). The first cleaning agent removing method is carried out preferably in the case where molecules where AX group remains are adsorbed to the surface of the base material 1, or in the case where a solvent having a comparatively high boiling point is used as the cleaning agent from the viewpoint of safety or the like. In the former case, the rinse step is carried out in order that remaining cleaning agent is removed, and HX eliminating reaction is allowed to take place so that OH group is introduced into the adsorbed molecules (see Fig. 6(a)). Therefore, water is preferably used as the rinse agent. Further, when the rinse agent drying step (S6) is carried out, dehydration reaction takes place between OH groups so that an organic thin film having a crosslinking structure shown in Fig. 6(b) can be formed. Meanwhile, in the latter case, since a high-boiling point solvent (cleaning agent) which adheres to an object to be cleaned is hardly dried and evaporated at normal temperature, its main object is to substitute the high-boiling point solvent by a low-boiling point rinse agent. As the low-boiling point rinse agent to be used in this case, acetone, alcohol or the like can be used. Here, in the rinse step, similarly to the removing step, the rinsing effect can be improved by application of a mechanical force such as a ultrasonic wave.

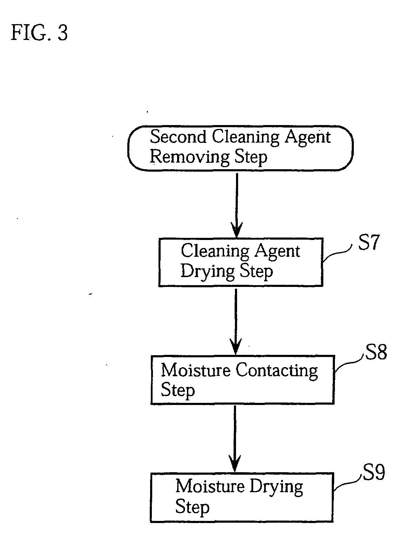

In addition, the second cleaning agent removing method includes a cleaning agent drying step (S7) of evaporating a cleaning agent to be evaporated (S7), and a contact step of bringing the base material 1 into contact with moisture (S8), and a drying step of drying the moisture (S9) (see Fig. 3). The second cleaning agent removing method is preferably executed in the case where a low-boiling point cleaning agent such as acetone and methyl ethyl ketone which is evaporated at normal temperature is used. The contact step is executed in order to allowing AX group remaining in the molecules adsorbed on the surface of the the base material 1 react with moisture and introduce OH group into the adsorbed molecules. Therefore, as the method of bringing the base material 1 into contact with moisture, for example, a method of leaving the base material 1 in air and allowing the base material 1 to react with moisture in the air, or a method of allowing the base material 1 to directly react with water is adopted. Thereafter, the drying step (S9) is carried out, and dehydration reaction takes place between OH groups so that an organic thin film having a crosslinking structure can be formed.

Moreover, as for another method besides the above-mentioned cleaning agent removing method, in the case where a low-boiling point cleaning agent that AX group does not exist in the molecules adsorbed to the base material 1 and which is evaporated at normal temperature is used, the cleaning agent may be simply dried after the removing step.

Here, one kind of material selected from a group of glass, metal, metal oxide, ceramics, plastic, timber, stone, fabric, paper, polymeric resin and the like can be applied to the base material 1. Moreover, the surface of the base material 1 is painted with coating compound. The base materials made of the above materials have similar physical properties in that a functional group having active hydrogen exists on their surfaces. In the case where plastic is particularly used as the material of the base material 1, it is considered that the property of the base material is changed depending on a type of plastic or the base material 1 is damaged due to dissolving or the like. Therefore, it is necessary to use a cleaning agent after previously ensuring that the cleaning agent does not have the above affects on the base material 1 made of plastic.

There will be listed concrete examples of applications to which the present invention can be applied, but the present invention is not limited to them.
(a) Examples of edge tools: kitchen knife, scissors, knife, cutter, chisel, razor, clipper, saw, plane, chisel, piercer, awl, cutting tools such as turning tools, blade of drill, blade of blender, blade of juicer, blade of mill, blade of lawn mower, punch, toll for cutting straw, staple of stapler, blade of can opener, surgical knife and the like.
(b) Examples of needle: needle of acupuncture, sewing needle, needle of sewing machine, needle of futon, a needle of tatami mat, a needle of injection, surgical needle, safety pin, push pin and the like.
(c) Examples of ceramic: ceramic ware, glass ware, products made of ceramic and enameling. For example, sanitary ware (for example, toilet stool, washbowl, bathtub and the like), tableware (for example, rice bowl, plate, bowl, teacup, can, bottle, container of percolator, pan, mortar, cut and the like), flower vase (for example, basin, flowerpot, small vase and the like), water tank (for example, water tank for culture, water tank appreciation and the like), chemistry apparatus (for example, beaker, reaction container, test tube, flask, petri dish, cooling tube, stirring rods, stirrer, mortar, batt, syringe and the like), tile, enameled tableware, enameled washbowl, enameled pan and the like).
(d) Example of mirror: hand mirror, mirror of compact, full-length mirror, mirror in bathroom, mirror in washroom, mirror of automobile (for example, rear-view mirror, side-view mirror and the like), traffic mirror (for example, mirror at curve, reflector and the like), half mirror, mirror for shop window, mirror in department and the like.
(e) Examples of molding components: press tool, foundry molding tool, injection die, carrier tool, vacuum forming tool, blow mold, extrusion molding die, inflation base, fabric spinneret, calendering roll and the like
(f) Examples of garniture: clock, precious stone, pearl, sapphire, ruby, emerald, garnet, cat's-eye, diamond, topaz, bloodstone, aquamarine, sardonyx, turquoise, jade, marble, amethyst, cameo, opal, crystal, glass, ring, bracelet, necklace, anklet, breastpin, tiepin, earring, pierced earring, precious metal garniture, platinum, gold, silver, copper, aluminum, titanium, tin, products made of alloy of them or stainless, glass frames and the like.
(g) Examples of food molding form: cake baking form, cookie baking form, bread baking form, chocolate baking form, jelly molding form, ice cream molding form, oven tray, ice tray and the like.
(h) Examples of cookware: pan, iron pot, kettle, pot, bowl, frying pan, hot plate, grill net, flinger, "takoyaki" plate, bread baking pot, pot of rice cake maker, pot of rice cooker, ladle, whisk and the like.
(i) Examples of paper: gravure paper, water repellent and oil repellent paper, poster paper, high-grade booklet paper and the like.
(j) Examples of resin: polypropylene, polyolefin such as polyethylene, polyvinyl chloride, polyvinylidene chloride, polyamide, polyimide, polyamide-imide, polyester, aramid, polystyrene, polysulfone, polyether-sulfone, polyphenylene sulfide, phenol resin, furan resin, urea resin, epoxy resin, polyurethane, silicone, ABS resin, methacrylic acid resin, methacrylate resin, acrylic resin, acrylate resin, polyacetal resin, polyphenylene oxide and the like.
(k) Examples of electric home appliances: television, radio, tape recorder, audio, personal computer, compact disk (CD), mini disk (MD), digital video disk (DVD), refrigerator of freezing equipments, freezer, air conditioner, juicer, blender, mill mixer, washing machine, vacuum cleaner, lighting fixtures, tumbler drier, dishwasher, shaver, antenna, blade of electric fan, dial plate, perm dryer and the like.
(l) Examples of sporting goods: skis, snowboard, skateboard, fishing pole, drop line, fishnet, float, pole for pole jump, ball, sailing board, jet-ski, surfboard, golf ball, bowling ball and the like.
(m) Example of applications to vehicle, vessel and airplane:
   (1) ABS resin: lamp cover, instrument panel, interior trim, protector of motorcycle
   (2) cellulosic plastic: mark and steering wheel of automobile
   (3) FRP (fiber reinforced plastic): shell bumper, engine cover
   (4) phenol resin: brake
   (5) polyacetal: windshielded wiper gear, gas valve, caburetor parts
   (6) polyamide: radiator fan
   (7) polyacrylate: directional lens, dashboard lens, relay housing
   (8) polybutylene terephthalate: rear end, front fender
   (9) polyamino bis-maleimide: engine parts, gear box, wheel, suspension drive system
   (10) methacrylic resin: lamp cover lens, instrumental board, instrumental board cover, center mark
   (11) polypropylene: bumper
   (12) polyphenylene oxide: radiator grill, wheel cap
   (13) polyurethane: bumper, fender, instrument panel fan,
   (14) unsaturated polyester resin: body, fuel tank, heater housing, instrument board and the like.
(n) Examples of office supplies: fountain pen, ball-point pen, mechanical pencil, pen case, binder, desk, chair, bookshelf, rack, letter case, telephone board, ruler, drawing utensil and the like.
(o) Examples of building materials: roof material, outer wall material and inner packing. ceramic tile, slate tile, galvanized sheet (galvanized sheet iron) and the like as outer wall materials. timber (including processed timber, mortar, concrete, ceramic-based sizing, metal-based sizing, brick, stone, plastic materials, metallic material such as aluminum and the like. timber (including processed timber), metallic material such as aluminum, plastic materials, paper, fiber and the like as inner packing.
(p) Examples of stone: granite, marble, granite and the like. For example, building, building material, work of art, ornament, bath, gravestone, monument, gatepost, stone fence, pitching and the like.
(q) Examples of musical instrument and acoustic equipments: musical instrument such as percussion instrument, string, calvier and aerophone, acoustic equipments such as microphone and speaker. for example, drum, cymbal, percussion, violin, cello, guitar, koto, piano, organ, accordion, harmonica, flute, hakuhachi, horn and the like.
(r) the others, thermos bottle, vacuum equipment, high withstand voltage insulating glass and the like having high water and oil repellent stainproof effect such as power transmitting glass or spark plug.

The inventors of the present invention have disclosed a chemisorption film where film density is improved and a manufacturing method thereof in Japanes Patent No. 2,598,867. In the chemically adsorbed film manufacturing method disclosed in this publication, adsorption reaction and cleaning for removing unreacted non-adsorbed molecules are repeated alternatively so that a chemisorption agent is fixed to a base body and a chemically adsorbed film, and a chemically adsorbed film having high density is formed. Moreover, a nonaqueous solvent is used for the cleaning, but the chemisorption film to be formed has a film structure which is different form that of the organic thin film devised by the inventors in the following points.

That is, the chemically adsorbed film formed by the above method, since chemisorption graft molecules are bonded to chemisorption backbone molecules first adsorbed to the base material even in a portion of the surface of the base material where a functional group having active hydrogen does not exist, a distance between molecules of the chemically adsorbed film becomes short so that a structure with high density is obtained. Furthermore, since hydroxyl group which is not used for bonding to the chemisorption backbone molecules or the like are being still bonded to the chemisorption graft molecules, a lot of hydroxyl group remains in the chemisorption film.

Meanwhile, in the organic thin film of the present invention, since most of the film forming molecules are adsorbed to the surface of the base material, its density is lower than that of the chemisorption film. Moreover, since the drying step is carried out in the manufacturing process and dehydration reaction is allowed to take place between the hydroxyl groups existing in the film so that the hydroxyl groups are crosslinked, there is a low expectation that hydroxyl group exists in the organic thin film in comparison with the chemisorption film.

Accordingly, the present invention establishes the manufacturing process as for the organic thin film having the film structure essentially different from that of the chemisorption film disclosed in the above publication.

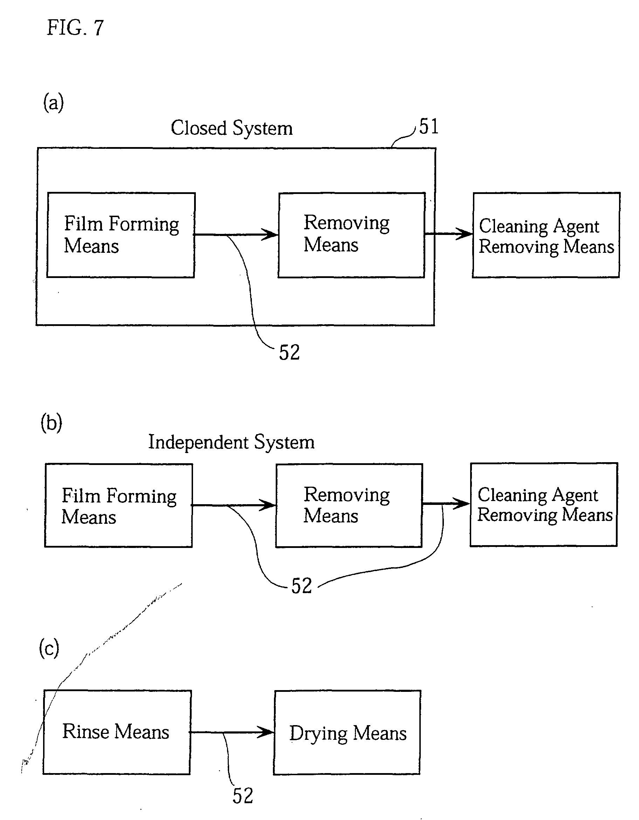

In addition, an organic thin film manufacturing apparatus of the present invention is composed of film forming means and removing means (see Fig. 7). Further, base material delivery means 52 composed of a conventionally known carrier apparatus, for example, can be disposed between the film forming means and the removing means.

The film forming means has a function that an chemisorption solution is applied to a base material and groups of adsorbed molecules included in the chemisorption solution are adsorbed and fixed onto the base material so that a film is formed. As the film forming means, concretely for example, a spinning or roller type coating applicator or the like can be used.

The removing means has a function that an object to be cleaned is cleaned by a cleaning agent including at least one selected from a group of ketone, alkylene glycol and alkoxy alcohol. Here, the object to be cleaned is non-adsorbed molecules which adhere to and remain on the base material (unfixed molecules).

Further, the film forming means and the removing means may be constituted so as to be included in one closed system, or they may be disposed independently.

Like the above constitution, the film forming means and removing means are in the one closed system so as to be capable of being isolated from the external air. As a result, the film forming step and the removing step can be carried out in a dry atmosphere (Fig. 7(a)). Here, the constitution that the film forming means and the removing means are in the one closed system means that, for example, air shielding means 51 in which the film forming means and removing means can be disposed is included in the organic thin film manufacturing apparatus. The air shielding means 51 is not particularly limited as long as it can isolate the external air from the inside, and for example, a chamber, a processing room or the like which can control temperature, humidity and the like can be provided. As the air shielding means 51, convection control means, which can, needless to say, control humidity as well as inner convection at normal temperature and pressure, can be provided. As a result, inner humidity and convection state can be controlled, and working safety can be secured. The working safety is necessary because when a compound with small molecular weight of ketone, alkylene glycol or alkoxy alcohol is used, a cleaning agent containing them requires special care due to its flammability.

In addition, the film forming means and the removing means, as mentioned above, can be constituted as processing units which are separated and independent from each other (Fig. 7(b)). Moreover, in the case where the film forming step and the removing step are desired to be carried out in a dry atmosphere, air shielding means may be disposed for each processing unit so that those means can be isolated form the air and can control humidity and the like.

The removing means may be of batch processing system or flow processing system.

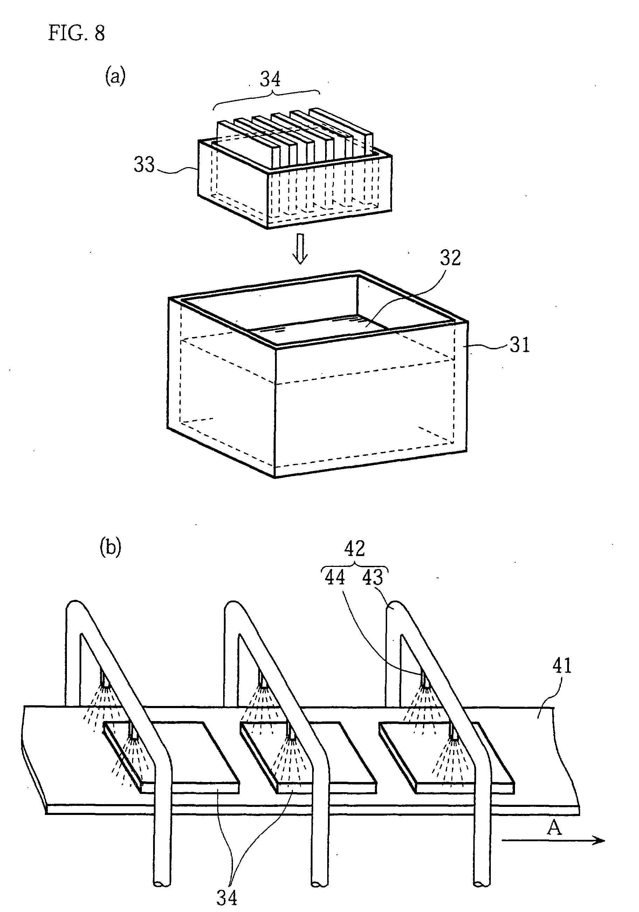

As the batch processing system, a soaking method or the like of soaking a base material as an object to be cleaned can be used. As concretely shown in Fig. 8(a), in this soaking method, the cleaning agent 32 is poured into a cleaning tank 31 and base materials 34 are placed in a cassette 33, and the cassette 33 is soaked in the cleaning tank 31 for predetermined time so that the base materials 34 are cleaned.

As shown in Fig. 8(b), for example, as the flow processing system, a cleaning apparatus, which is composed of a carrier section 41 for carrying the base materials 34 and a plurality of injection devices 42 for injecting a cleaning agent, can be used. Further, the injection devices 42 are composed of a gate arch-shaped main body section 43 and nozzles 43 for injecting the cleaning agent like spray or droplet. Moreover, the nozzles 43 are provided so that the injection direction of the cleaning agent is the same as a down direction. On the other hand, the carrier section 41 is provided so as to be inside the gate arch-shaped main body section 43. In the cleaning apparatus having the above structure, the base materials 34 placed on the carrier section 41 are carried to a direction of an arrow A, and the cleaning agent is injected from the nozzles 44 so that the base materials 34 are cleaned. The above-mentioned batch processing system and the flow processing system are only examples, and the present invention is not limited to the above means. Any techniques which have the structure substantially same as the technical idea described in claims of the present invention and the similar functions and effects are included in the technical scope of the present invention.

In addition, the organic thin film manufacturing apparatus of the present invention can be provided with cleaning agent removing means so that the cleaning agent removing step of removing the cleaning agent adhering to the base material is carried out as the need arises (Figs. 7(a) and 7(b)). Further, the cleaning agent removing means, as shown in Fig. 7(c), may have rinse means and drying means. The rinse means is not particularly limited, and conventionally known various rinse apparatuses can be used. Moreover, the drying means is not particularly limited, and conventionally known various drying apparatuses can be used. As the drying means, blow by means of normal temperature wind or warm wind can be suitably adopted.

In addition, in the case where a base material made of paper, fiber or the like is used and an organic thin film is formed on this base material, it is necessary to select a type of cleaning agents, a cleaning method and the like suitably as the need arises.

### [Liquid Crystal Alignment Film and Liquid Crystal Display Device]

In the case where the organic thin film of the present invention is applied as the liquid crystal alignment film to a liquid crystal display device, the organic thin film can be manufactured by the following method.

At first, a substrate, on which electrodes or the like made of ITO (indium tin oxide) are formed according to the above-mentioned procedure, is brought into contact with the chemisorption solution so that the adsorbed molecules are adsorbed (S2, see Fig. 1). The adsorbed molecules can be adsorbed onto the surface of ITO because OH group exists on the surface of ITO, and the adsorbed molecules has a functional group showing reactivity to a functional group having active hydrogen such as OH group. As a result, a thin film with excellent peeling resistance can be formed.

In addition, in the case where little OH group or the like exist on the surface of ITO, it is preferable that an excimer UV treatment, a plasma treatment or the like is conducted, the surface of ITO is reformed so that OH group is increased, or another substance layer (for example, deposited SiO layer or the like) is formed on the substrate so that a liquid crystal alignment film is formed via the substance layer.

Next, non-adsorption molecules remaining on the surface of the substrate are cleaned and removed at S3. As a result, the remaining non-adsorption molecules are removed so that a thin film with uniform thickness can be formed. Therefore, turbulence of the alignment state of liquid crystal due to the remaining non-adsorption molecules, namely, an alignment defect can be suppressed. Moreover, in the case where cleaning is carried out by a conventional cleaning agent such as chloroform, there arose a problem that turbulence of the adsorbed state of the adsorbed molecules occurs due to the cleaning. However, in the above removing step, since the cleaning is carried out by using the cleaning agent containing one selected from the group of ketone, alkylene glycol and alkoxy alcohol, the turbulence of the adsorbed state of the adsorbed molecules hardly occurs, and an ordered film structure that the groups of adsorbed molecules align uniformly can be obtained.

Next, similarly to the case of the above-mentioned organic thin film manufacturing method, the cleaning agent is removed or the like at S4 so that the liquid crystal alignment film of the present invention can be manufactured. Here, the liquid crystal alignment film may be subject to an aligning treatment such as a rubbing treatment as the need arises.

As a result, the liquid crystal alignment film manufacturing method of the present invention can form a liquid crystal alignment film having uniform thickness without using a chlorine-based cleaning agent while a load to environment is being suppressed.

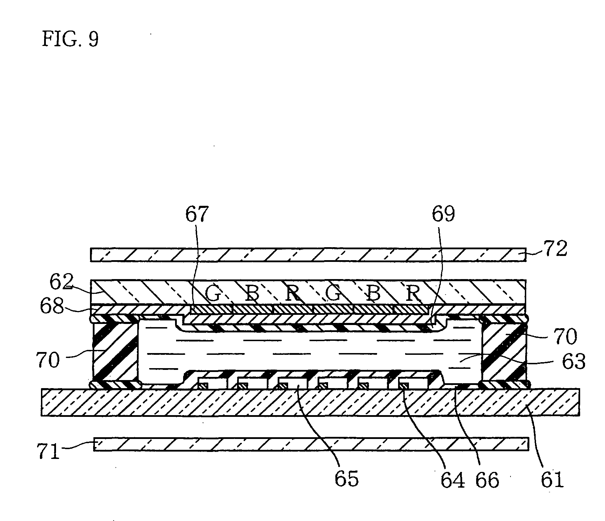

The liquid crystal alignment film obtained in the above manner can be applied to the liquid crystal display device according to the embodiment shown in Fig. 9, for example. That is, the liquid crystal display device of the present invention can be constituted so as to have a first substrate 61, a second substrate 62 which twins with the first substrate 61, and a liquid crystal layer 63 which intervenes between the first substrate 61 and the second substrate 62. TFT (thin film transistor) groups 64 and first electrodes 65 are formed on an inner side of the first substrate 61, and a liquid crystal alignment film 66 is formed on the first electrode 65. A color filter 67 is formed on an inner surface of the second substrate 62, and a second electrode 68 is formed on the second substrate 62 and the color filter 67. A liquid crystal alignment film 69 is formed on the second electrode 68. Moreover, the first substrate 61 and the second substrate 62 are bonded by a seal member 70 so that liquid crystal is sealed and held in a panel. A polarization plate 71 is provided on an outer side of the first substrate 61, and a polarization plate 72 is provided on an outer side of the second substrate 62.

The first substrate 61 and the second substrate 62 are transparent substrates made of glass, for example. Moreover, the first electrode 65 and the second electrode 68 are transparent conductive film made of ITO, for example. The liquid crystal layer 63 is constituted so as to include nematic liquid crystal, for example. The color filter 67 is constituted so as to include dots of R (red), G (green) and B (blue).

According to the liquid crystal display device having the above structure, the alignment defect or the like of liquid crystal is not visually recognized so that excellent display quality can be provided. This is because, as mentioned above, the thickness of the liquid crystal alignment film is uniform and the film structure that the groups of adsorbed molecules are adsorbed uniformly is obtained, and thus excellent aligning performance is displayed so that liquid crystal molecules can be aligned without disorder of the alignment state.

Further, the liquid crystal display device having the above structure can be manufactured by adopting a conventional known method except that liquid crystal alignment films 66 and 69 are deposited by the above-mentioned method.

The liquid crystal alignment film manufacturing apparatus according to the present invention can have the structure similar to that of the above-mentioned organic thin film manufacturing apparatus. Therefore, the detailed explanation thereof is omitted.

There will be detailed exemplarily below suitable embodiments of the present invention with reference to the drawings. Here, material, manufacturing conditions and the like of the components described in the embodiments are only explanatory examples, and the scope of the present invention is not limited to them as long as particularly limited description is not given.

### [First Embodiment]

### (Embodiment 1-1)

n-octadecyl trichlorosilane was dissolved in hexadecane so as to be about 1 weight%, and an chemisorption solution A was prepared.

Next, a glass substrate 11 (2 cm × 5 cm, thickness: 1.1 mm) which was subject to degreasing cleaning sufficiently was soaked in the chemisorption solution A for 1 hour. As a result, a dehydrochlorination reaction represented by the following chemical equation took place between hydroxyl group existing on the surface of the glass substrate 11 and trichloroxyl group, and the chemisorption solution A was chemisorbed onto the glass substrate 11 via siloxane bond.

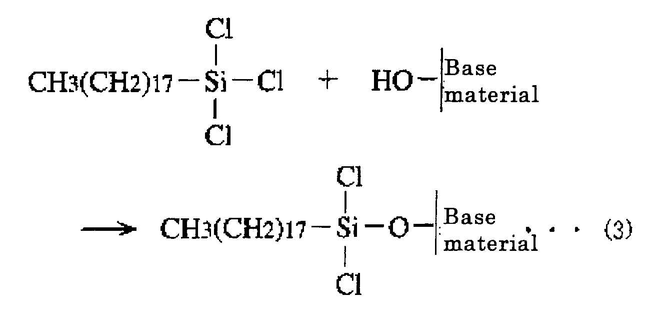

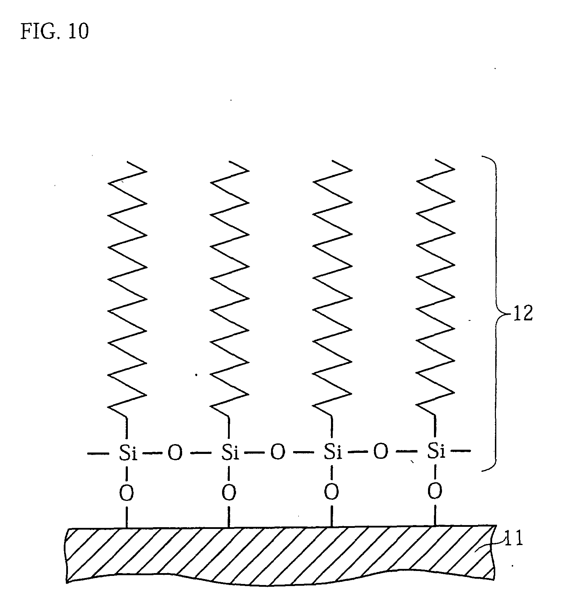

Next, a sufficient amount (50 ml to 100 ml) of acetone as a cleaning agent was poured into a cleaning tank in air of relative humidity of about 35% and was heated at about 45°C. The glass substrate 11 was sufficiently cleaned in the cleaning tank. Further, the glass substrate 11 was rinsed sufficiently in order to rinse off polyethylene glycol which adhered to the surface of the glass substrate 11 with water. As a result, the cleaning agent is rinsed off, and unreacted Cl group in molecules chemisorbed onto the glass substrate 11 is substituted by OH group. Next, the glass substrate 11 was dried. As a result, a dehydration reaction took place between the OH groups and the OH groups were crosslinked so that a monomolecular film 12 shown in Fig. 10 was formed on the glass substrate.

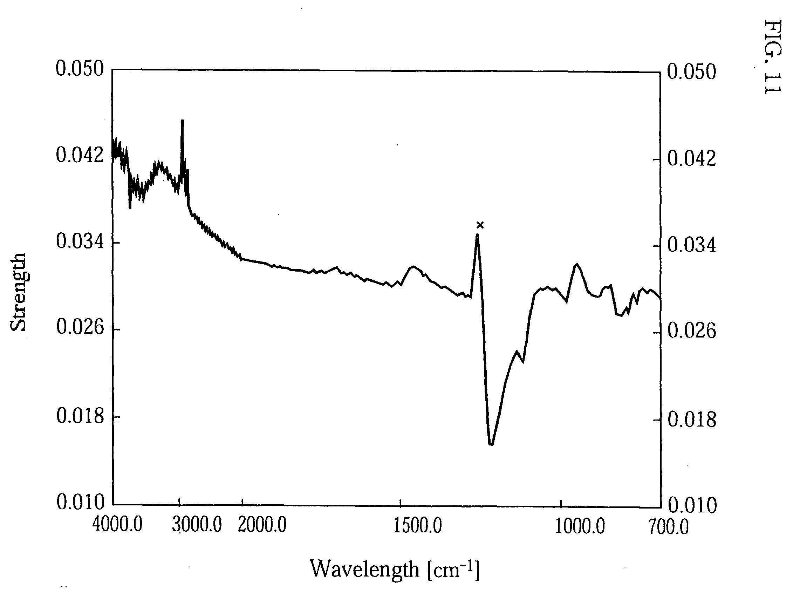

Here, when the monomolecular film 12 was measured by Fourier transform infrared spectroscopy method (hereinafter, referred to as FT-IR), as shown in Fig. 11, a signal, which is distinctive in 2930 to 2840 cm⁻¹ (attribute: CH₃ and -CH₂-), 1470 cm⁻¹ (attribute: -CH₂-), and 1080 cm⁻¹ (attribute: -Si-O-), could be obtained. As a result, it was confirmed that the monomolecular film 12 shown in Fig. 10 was formed.

The removing step in the present embodiment may be carried out in dry air with relative humidity of not more than 5% or in nitrogen, but the satisfactory result could be obtained in air with relative humidity of not more than 35%.

### (Comparative example 1-1)

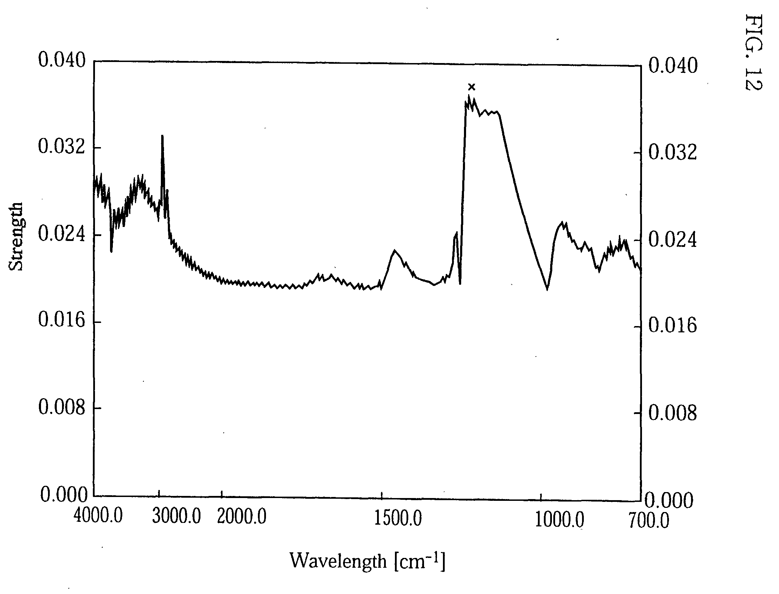

In this comparative example 1-1, the steps similar to the above embodiment 1-1 except that chloroform was used as a cleaning agent were carried out so that the monomolecular film 12 was deposited on the glass substrate 11. When this monomolecular film 12 was subject to FT-IR measurement, as shown in Fig. 12, a signal with absorption strength approximately same as that of the absorption spectrum shown in Fig. 11 could be obtained in the absorption position approximately same as that of the absorption pectrum shown in Fig. 11.

Furthermore, when the embodiment 1-1 was compared with the comparative example 1-1 in detail, the following different points in the film structures were found out. Namely, in the absorption spectrums shown in Figs. 11 and 12, when adsorption to CH₂ of 2920 cm⁻¹ resulted from asymmetric stretching vibration was compared with adsorption to CH2 of 2860 cm⁻¹ resulted from symmetric stretching vibration, its absorption ratio became 2.2:1 in Fig. 11 of the embodiment 1-1 and 2.0:1 in Fig. 12 of the comparative example 1-1. This shows that the monomolecular film of the embodiment 1-1 has the film structure which is more uniform and ordered than that of the monomolecular film in the comparative example 1-1. This is because in the FT-IR measurement method, a judgment can be made that as the absorption ratio of CH₂ reaches 1:1 closer, the adsorption state of the film forming molecules (adsorbed molecules) is more disordered (T.Ohtake et al., Langmuir, 2081,8,1992).

### (Embodiment 1-2)

In an embodiment 1-2, the steps similar to those in the embodiment 1-1 except that methyl ethyl ketone (50 ml to 100 ml) was used as a cleaning agent were carried out so that the monomolecular film 12 was disposed on the glass substrate 11. When this monomolecular film 12 was subject to the FT-IR measurement, a signal with adsorption strength approximately same as that in Fig. 11 was be obtained in the position approximately same as that in Fig. 11.

### (Embodiment 1-3)

At first, a compound of about 1 weight% represented by the following chemical equation (4) was dissolved in siloxane-based solvent (product name: KF96L made by Shin-Etsu Chemical Co. Ltd.)/toluene (= 10/1) so that an chemisorption solution B was prepared.

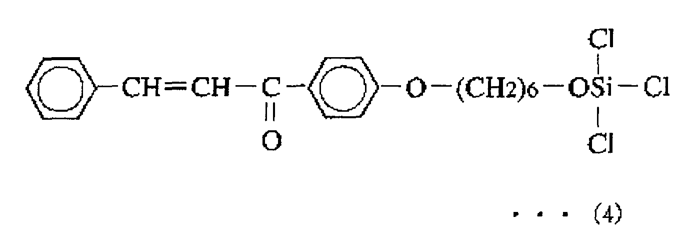

Next, the glass substrate 11 which was sufficiently degreased and cleaned was soaked in the chemisorption solution B for 1 hour in a nitrogen atmosphere. As a result, the molecules represented by the above chemical equation (4) were chemisorbed onto the brass substrate 11 as represented by the following chemical equation (5).

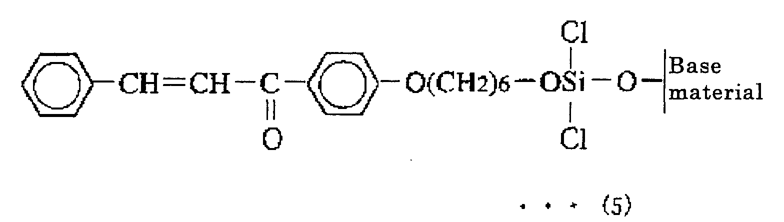

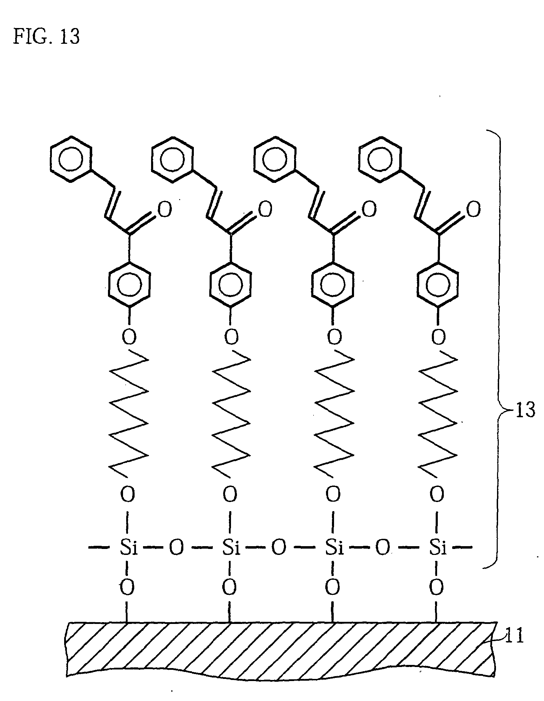

Next, sufficient amount of acetone (50 ml to 100 ml) as a cleaning agent was poured into a cleaning tank in air with humidity of 35%, and the glass substrate 11 was sufficiently cleaned in the cleaning tank. Further, the glass substrate 11 was sufficiently rinsed in order to rinse off the acetone adhering to the surface of the glass substrate 11 with water. As a result, the cleaning agent is rinsed off, and unreacted Cl group in the molecules chemisorbed onto the glass substrate 11 is substituted by OH group. Next, the glass substrate 11 was dried. As a result, the OH groups are dehydrated to be crosslinked, and a monomolecular film 13 shown in Fig. 13 was formed on the glass substrate 11.

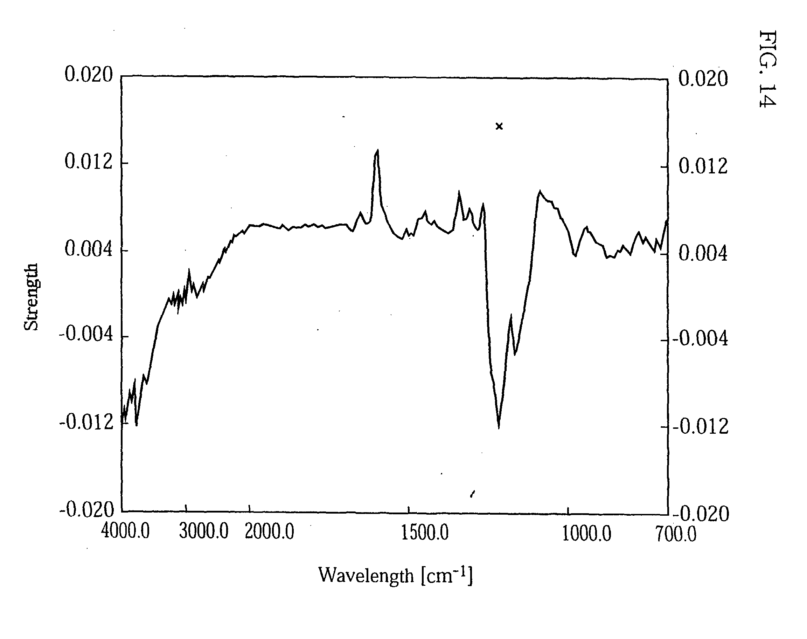

Here, when the monomolecular film 13 was measured by FT-IR, as shown in Fig. 14, a signal, which is distinctive in 2920 to 2840 cm⁻¹ (attribute: -CH₂₋), 1650 cm⁻¹ (attribute: C=0), 1600 cm⁻¹ (attribute: benzen skeleton), 1345 cm⁻¹ (attribute: benzen skeleton) and 1080 cm⁻¹ (attribute: -Si-O-), could be obtained. As a result, it was confirmed that the monomolecular film 12 was formed.

### (Comparative example 1-2)

In the comparative example 1-2, the steps similar to those in the embodiment 1-3 except that chloroform was used as a cleaning agent were carried out so that the monomolecular film 13 was deposited on the glass substrate 11. When this monomolecular film 13 was subject to the FT-IR measurement, as shown in Fig. 15, a signal with absorption strength approximately same as that in Fig. 14 was obtained in a position approximately same as that in Fig. 14.

Further, when the embodiment 1-3 was compared with the comparative example 1-2 in detail, the following different points in the film structures were found out. That is, in the absorption spectrums shown in Figs. 14 and 15, absorption to CH₂ of 2920 cm⁻¹ resulted from asymmetric stretching vibration was compared with absorption to CH₂ of 2860 cm⁻¹ resulted from symmetric stretching vibration, the absorption ratio became 2.1:1 in Fig. 14 of the embodiment 1-3 and 1.9:1 in Fig. 15 of the comparative example 1-2. Therefore, it was found that the monomolecular film of the embodiment 1-3 has the film structure which is more uniform and ordered than that of the monomolecular film of the comparative example 1-2.

### (Comparative example 1-3)

In the comparative example 1-3, the steps similar to those in the embodiment 1-3 except that ethyl acetate or ethyl formate was used as a cleaning agent were carried out so that the monomolecular film 13 was deposited on the glass substrate 11. When the glass substrate 11 on which the monomolecular film 13 was deposited was exposed to air, the surface of the glass substrate 11 got a nebula in an instant so that a transparent thin film could not be deposited. Here, the ethyl acetate, and ethyl formate are ester group disclosed in Japanese Unexamined Patent Application Publication Nos. 6-45142 (1994), 6-312477 (1994), 6-187692 (1994) and the like.

### (Comparative example 1-4)

In the comparative example 1-4, the steps similar to those in the embodiment 1-3 except that toluene was used as a cleaning agent were carried out so that the monomolecular film 13 was deposited on the glass substrate 11.

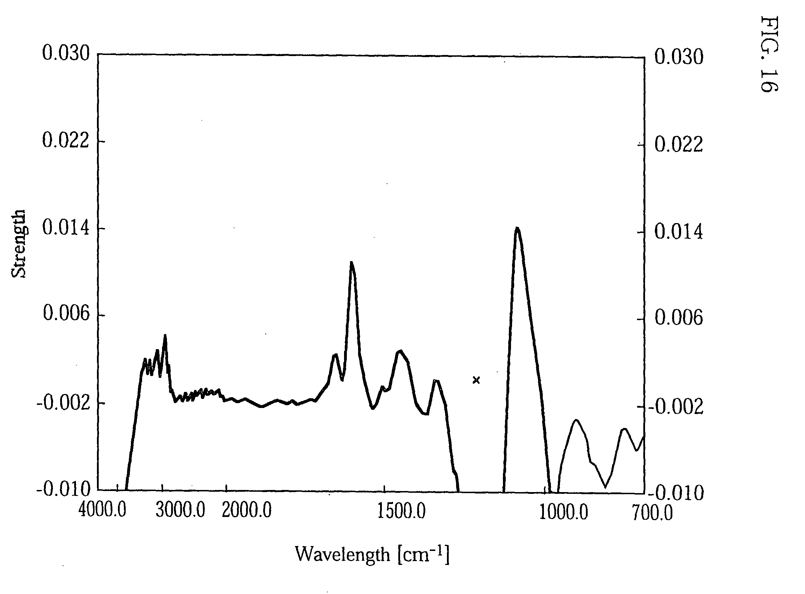

When the monomolecular film 13 deposited on the glass substrate 11 was observed, it was seen that the monomolecular film 13 clouded up thin. Further, when the monomolecular film 13 was subject to the FT-IR measurement, as shown in Fig. 16, a signal with great absorption strength was obtained clearly differently from Figs. 14 and 15. This shows that in the case where toluene is used as a cleaning agent, the cleaning is insufficient.

### (Comparative example 1-5)

In the comparative example 1-5, the steps similar to those in the embodiment 1-3 except that DMF (dimethyl formamide) was used as a cleaning agent were carried out so that the monomolecular film 13 was deposited on the glass substrate 11.

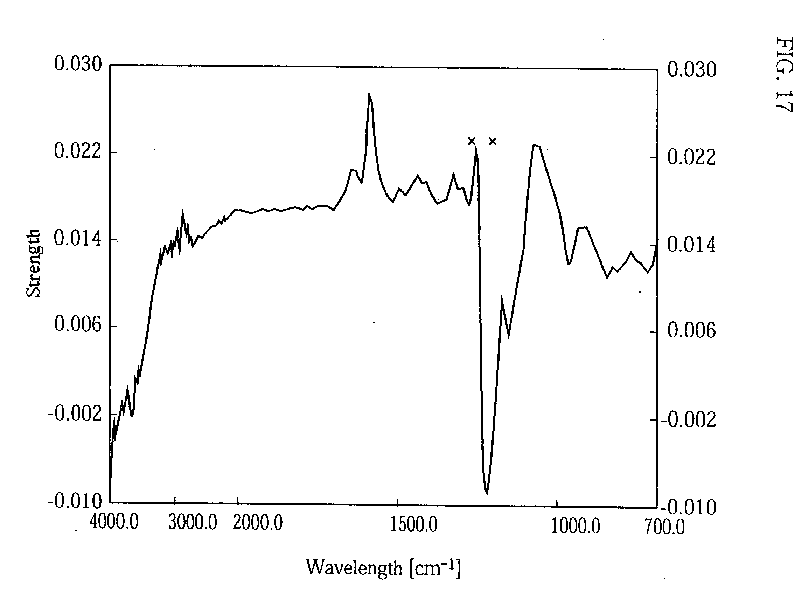

When this monomolecular film was observed, it was seen as colorless and transparent. Further, when the monomolecular film 13 was subject to the FT-IR measurement, as shown in Fig. 17, a signal with great absorption strength was obtained clearly differently from Figs. 14 and 15. This shows that in the case where DMF is used as a cleaning agent, the cleaning is insufficient.

### (Result)

According to the above results, it was confirmed that when an organic thin film was manufactured, acetone or methyl ethyl ketone was used as a cleaning agent at the removing step so that the cleaning effect which is the same as that of chloroform was produced. Further, it was confirmed that also in the case where diethyl ketone, methyl isobutyl ketone, acetyl ketone or the like was used besides the acetone or methyl ethyl ketone, the cleaning effect which is the same as that of the case where chloroform was used can be produced. Meanwhile, it was confirmed that the above cleaning agents have more excellent cleaning effect in comparison with the case where toluene or DMF which is not a chlorine-based cleaning agent was used as a cleaning agent. Therefore, it was found that the cleaning agents according to the above embodiments are useful as substitute cleaning agents of organic chlorine-based solvent.

### [Second Embodiment]

### (Embodiment 2-1)

At first, n-octadecyl trichlorosilane of about 1 weight% was dissolved in hexadecane so that an chemisorption solution A was prepared.

Next, a glass substrate 21 (20 × 7 mm, thickness: 1.1 mm) which was subject to degreasing cleaning sufficiently was soaked in the chemisorption solution A for 1 hour. As a result, dehydrochlorination reaction represented by the following chemical equation took place between hydroxyl group existing on the surface of the glass substrate 21 and trichloroxyl group so that the chemisorption solution A was chemisorbed onto the glass substrate 21 via siloxane bond.

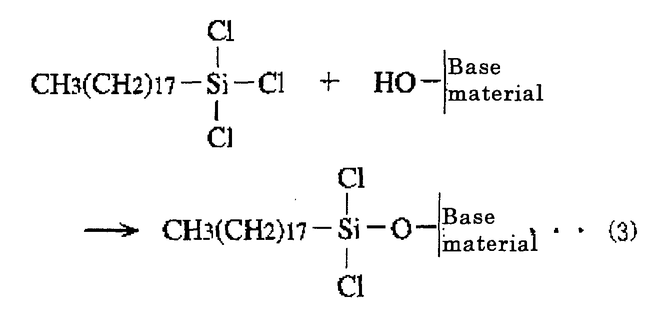

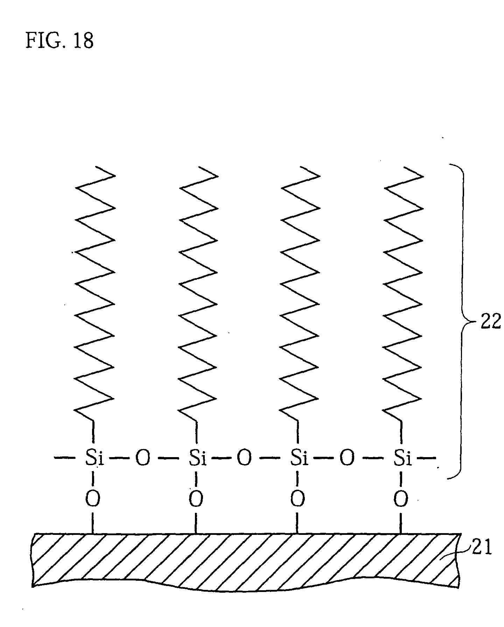

Next, polyethylene glycol (average molecular weight: 300) of 50 ml (an amount that the glass substrate 21 is soaked therein sufficiently and shaking-off cleaning is possible) as a cleaning agent was poured into a cleaning tank in an air with relative humidity of about 35% to be heated at about 45°C. The glass substrate 21 was cleaned in the cleaning tank three times. Cleaning time required for the cleaning at a time was about 1 minute. Further, the glass substrate 21 was rinsed in order to rinse off polyethylene glycol which adhered to the surface of the substrate 21 with water. The rinsing was conducted by leaving the glass substrate 11 in flowing water for 5 minutes. As a result, the cleaning agent is rinsed off, and unreacted Cl group in the molecules chemisorbed to the glass substrate 21 is substituted by OH group. Next, the glass substrate 21 was dried. As a result, the OH groups are dehydrated so as to be crosslinked, and a monomolecular film 22 shown in Fig. 18 was formed on the glass substrate 21.

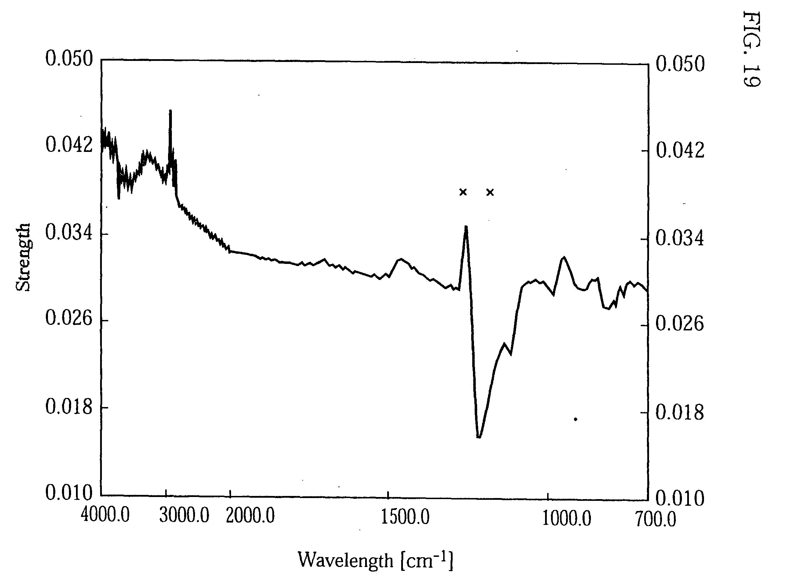

Here, when the monomolecular film 22 was measured according to the Fourier transform infrared spectroscopy method (hereinafter, referred to as FT-IR), as shown in Fig. 19, a signal, which is distinctive in 2930 to 2840 cm⁻¹ (attribute: CH₃ and -CH₂-), 1470 cm⁻¹ (attribute: -CH₂-), and 1080 cm⁻¹ (attribute: -Si-O-), could be obtained. As a result, it was confirmed that the monomolecular film 22 shown in Fig. 18 was formed.

The removing step in the present embodiment may be carried out in dry air with relative humidity of not more than 5% or in nitrogen, but the satisfactory result could be obtained in air with relative humidity of not more than 35%.

### (Comparative example 2-1)

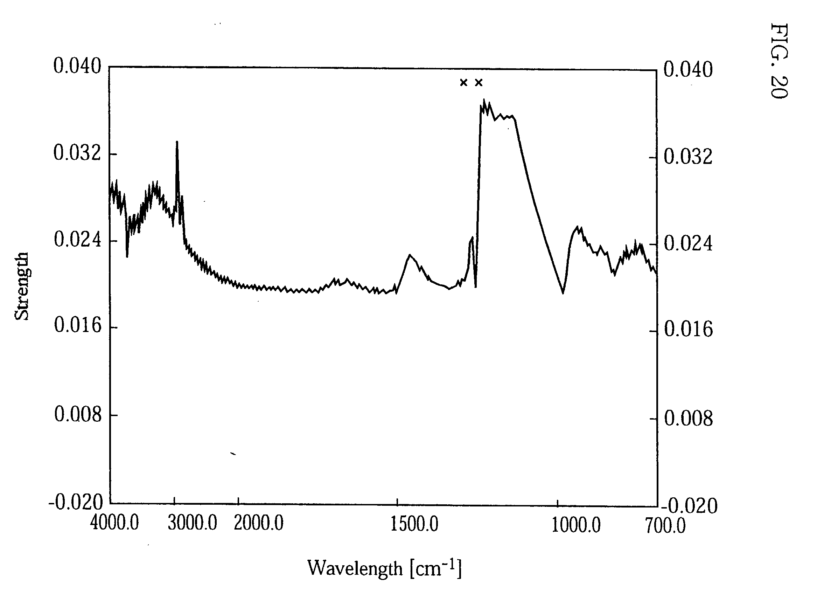

In the comparative example 2-1, the steps similar to the above embodiment 2-1 except that chloroform was used as a cleaning agent were carried out so that the monomolecular film 22 was deposited on the glass substrate 21. When this monomolecular film 22 was subject to FT-IR measurement, as shown in Fig. 20, a signal with absorption strength approximately same as that of the absorption spectrum shown in Fig. 20 could be obtained in the absorption position approximately same as that of the absorption pectrum shown in Fig. 19.

Furthermore, when the embodiment 2-1 was compared with the comparative example 2-1 in detail, the following different points in the film structures were found out. Namely, in the absorption spectrums shown in Figs. 19 and 20, when adsorption to CH₂ of 2920 cm⁻¹ resulted from asymmetric stretching vibration was compared with adsorption to CH2 of 2860 cm⁻¹ resulted from symmetric stretching vibration, its absorption ratio became 1.65:1 in Fig. 19 of the embodiment 2-1 and 1.58:1 in Fig. 20 of the comparative example 2-1. Therefore, it was found that that the monomolecular film of the embodiment 2-1 has the film structure which is more uniform and ordered than that of the monomolecular film in the comparative example 2-1.

### (Embodiment 2-2)

At first, a compound of about 1 weight% represented by the following chemical equation (4) was dissolved in siloxane-based solvent (product name: KF96L made by Shin-Etsu Chemical Co. Ltd.)/toluene (= 10/1) so that an chemisorption solution B was prepared.

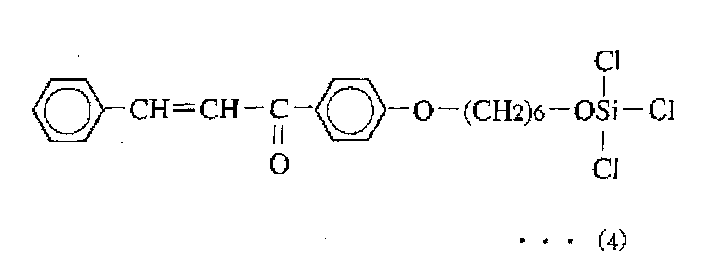

Next, the glass substrate 21 which was sufficiently degreased and cleaned was soaked in the chemisorption solution B for 1 hour in a nitrogen atmosphere. As a result, the molecules represented by the above chemical equation (4) were chemisorbed onto the brass substrate 21 as represented by the following chemical equation (5).

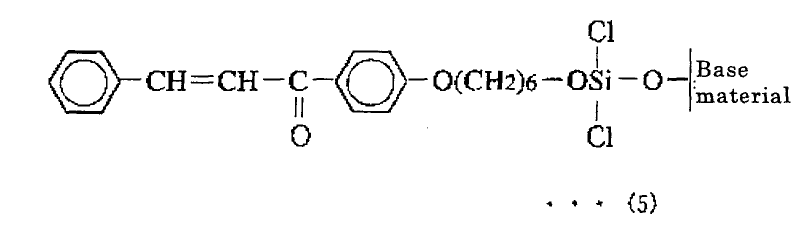

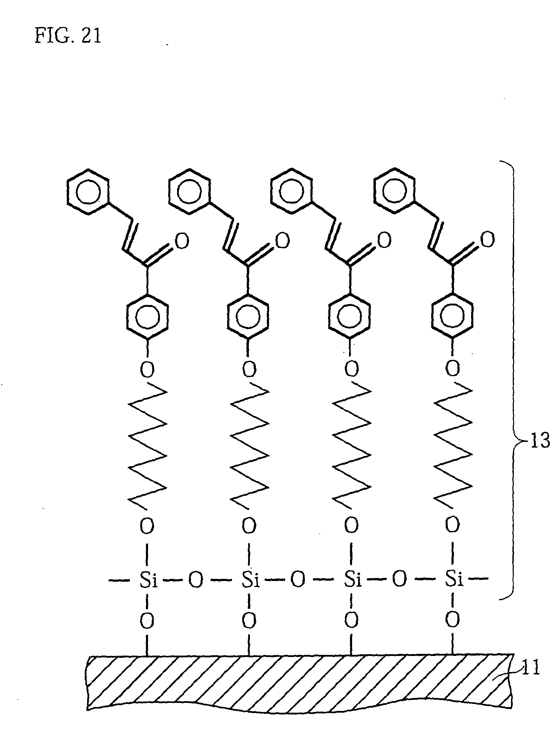

Next, sufficient amount of glycol ether (product name: PK-LCG55, made by Parker Corporation) (average molecular weight: 200) as a cleaning agent was poured into a cleaning tank in air with humidity of 50% so that the cleaning tank was heated at, about 80°C. The glass substrate 21 was sufficiently cleaned in the cleaning tank. Further, the glass substrate 21 was sufficiently rinsed in order to rinse off the polyethylene glycol adhering to the surface of the glass substrate 21. As a result, the cleaning agent is rinsed off, and unreacted Cl group in the molecules chemisorbed onto the glass substrate is substituted by OH group. Next, the glass substrate 21 was dried. As a result, the OH groups are dehydrated to be crosslinked, and a monomolecular film 23 shown in Fig. 21 was formed on the glass substrate 21.

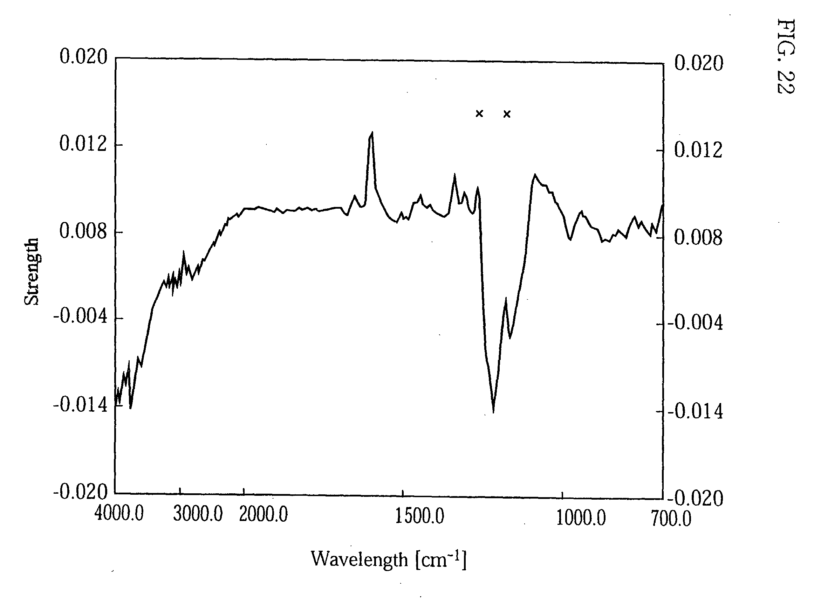

Here, when the monomolecular film 23 was measured by FT-IR, as shown in Fig. 22, a signal, which is distinctive in 2920 to 2840 cm⁻¹ (attribute: -CH₂-), 1650 cm⁻¹ (attribute: C=0), 1600 cm⁻¹ (attribute: benzen skeleton), 1345 cm⁻¹ (attribute: benzen skeleton) and 1080 cm⁻¹ (attribute: -Si-O-), could be obtained. As a result, it was confirmed that the film was formed.

### (Comparative example 2-2)

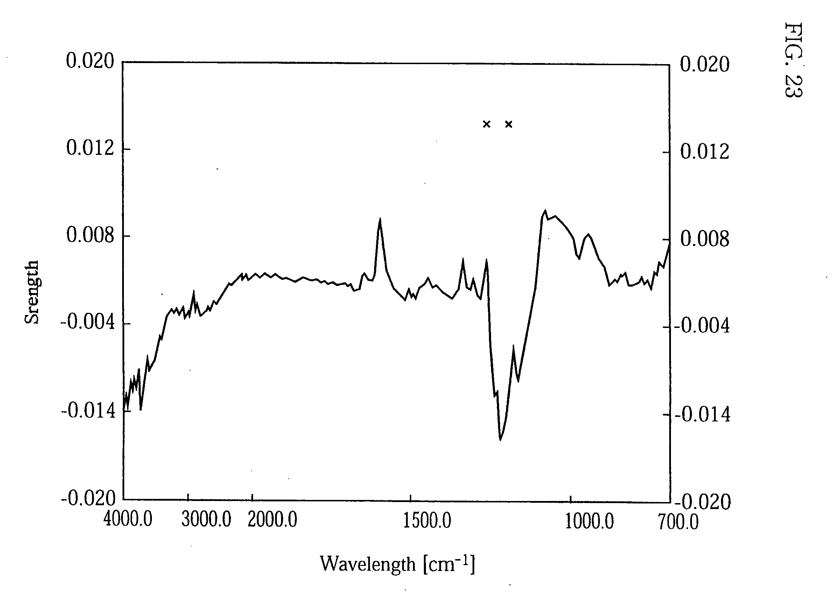

In the comparative example 2-2, the steps similar to those in the embodiment 2-2 except that chloroform was used as a cleaning agent were carried out so that the monomolecular film 23 was deposited on the glass substrate 21. When this monomolecular film 23 was subject to the FT-IR measurement, as shown in Fig. 23, a signal with absorption strength approximately same as that in Fig. 22 was obtained in a position approximately same as that in Fig. 22.

Further, when the embodiment 2-2 was compared with the comparative example 2-2 in detail, the following different points in the film structures were found out. That is, in the absorption spectrums shown in Figs. 22 and 23, absorption to CH₂ of 2920 cm⁻¹ resulted from asymmetric stretching vibration was compared with absorption to CH₂ of 2860 cm⁻¹ resulted from symmetric stretching vibration, the absorption ratio became 1.8:1 in Fig. 22 of the embodiment 2-2 and 1.7:1 in Fig. 23 of the comparative example 2-2. Therefore, it was found that the monomolecular film of the embodiment 2-2 has the film structure which is more uniform and ordered than that of the monomolecular film of the comparative example 2-2.

### (Embodiment 2-3)

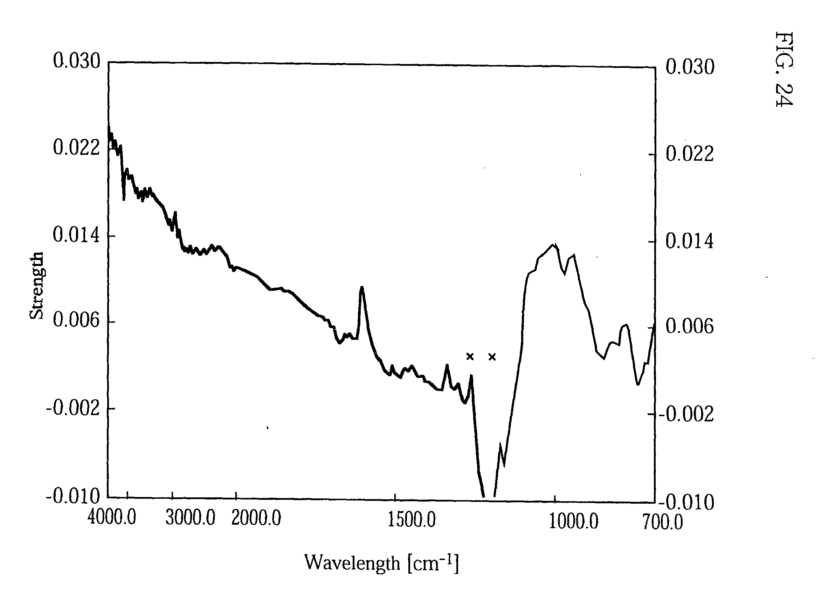

In the embodiment 2-3, the steps similar to those in the embodiment 2-2 except that ethoxy ethanol was used as a cleaning agent were carried out so that the monomolecular film 23 was deposited on the glass substrate 21. When this monomolecular film 23 was subject to the FT-IR measurement, as shown in Fig. 24, a signal with absorption strength approximately same as that in Figs. 22 and 23 could be obtained in a position approximately same as that in Figs. 22 and 23.

### (Comparative example 2-3)

In the comparative example 2-3, the steps similar to those in the embodiment 2-2 except that toluene was used as a cleaning agent were carried out so that the monomolecular film 23 was deposited on the glass substrate 21.

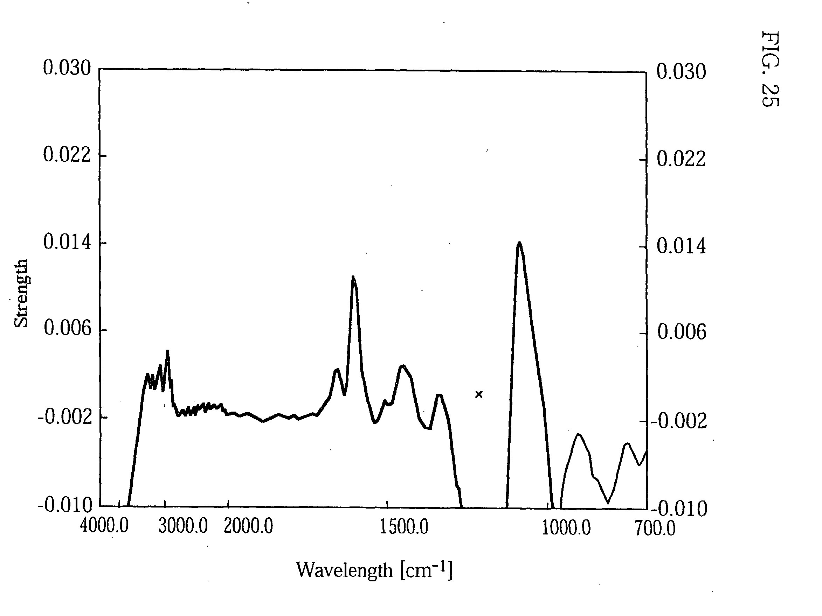

When the monomolecular film 23 deposited on the glass substrate 21 was observed, it was seen that the monomolecular film 23 clouded up thin. Further, when the monomolecular film 23 was subject to the FT-IR measurement, as shown in Fig. 25, a signal with great absorption strength was obtained clearly differently from Figs. 22 and 23. This shows that in the case where toluene is used as a cleaning agent, the cleaning is insufficient.

### (Comparative example 2-4)

In the comparative example 2-4, the steps similar to those in the embodiment 2-2 except that DMF (dimethyl formamide) was used as a cleaning agent were carried out so that the monomolecular film 23 was deposited on the glass substrate 21.

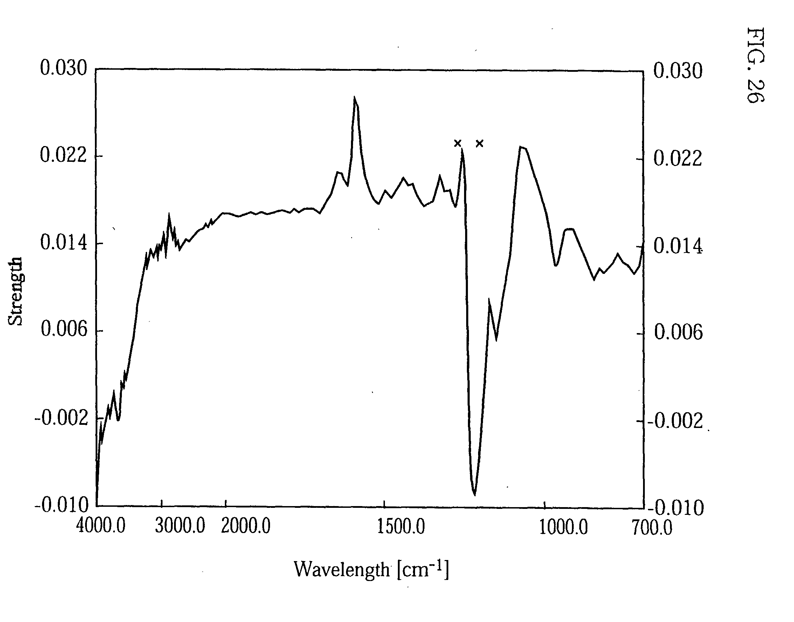

When this monomolecular film 23 was observed, it was seen as colorless and transparent. Further, when the monomolecular film 23 was subject to the FT-IR measurement, as shown in Fig. 26, a signal with great absorption strength was obtained clearly differently from Figs. 22 and 23. This shows that in the case where DMF is used as a cleaning agent, the cleaning is insufficient.

### (Result)

According to the above results, it was confirmed that when an organic thin film was manufactured, polyethylene glycol, glycol ether or ethoxy ethanol was used as a cleaning agent at the removing step so that the cleaning effect which is the same as that of chloroform was produced. As a result, the organic thin film with uniform thickness where non-adsorbed molecules are removed could be manufactured. Meanwhile, it was confirmed that the above cleaning agents have more excellent cleaning effect in comparison with the case where toluene or DMF which is not a chlorine-based cleaning agent was used as a cleaning agent. Therefore, it was found that the cleaning agents according to the above embodiments are useful as substitute cleaning agents of organic chlorine-based solvent.

As this invention may be embodied in several forms without departing from the spirits of essential characteristics thereof, the present embodiment is therefore illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

### INDUSTRIAL APPLICABILITY

As explained above, according to the structures of the present invention, the problems of the present invention can be solved sufficiently.

That is, according to the organic thin film of the present invention, since the organic thin film is formed by cleaned by the cleaning agent containing at least one selected from the group of ketone, alkylene glycol and alkoxy alcohol, the film structure with uniform thickness which is aligned uniformly and is ordered can be obtained.

Further, according to the organic thin film manufacturing method of the present invention, the cleaning agent which contains at least one selected from the group of ketone, alkylene glycol and alkoxy alcohol is used so that unfixed molecules can be removed by using this cleaning agent as substitute cleaning agent of a chlorine-based solvent. As a result, the organic thin film having uniform thickness can be manufactured. As a result, the organic thin film manufacturing process which reduces a load to environment can be provided.

In addition, according to the liquid crystal alignment film of the present invention, since this alignment film has the film structure where the thickness is uniform and molecules are aligned uniformed and ordered, liquid crystal molecules can be aligned without disturbing the alignment state.

Further, according to the liquid crystal alignment film manufacturing method of the present invention, the cleaning agent which contains at least one selected from the group of ketone, alkylene glycol and alkoxy alcohol is used so that unfixed molecules can be removed without using a chlorine-based organic solvent, and the liquid crystal alignment film with uniform thickness can be manufactured. Moreover, the liquid crystal alignment film, which has the adsorption state with respect to a substrate and excellent alignment function, can be manufactured while a load to environment is being reduced without disordering the film structure.

Further, the liquid crystal display device having such a liquid crystal alignment film can produce the effect that alignment defect or the like of liquid crystal is not visually recognized and display quality is excellent. Therefore, the industrial significance of the present invention is great.

## Claims

1. An organic thin film composed of molecules bonded to a base material, characterized in that said organic thin film is obtained so that after molecules having a functional group showing reactivity to a functional group having active hydrogen are brought into contact with and bonded to a surface of said base material, the molecules which are not bonded to said base material are removed by a cleaning agent which contains at least one selected from a group of ketone, alkylene glycol and alkoxy alcohol.

2. The organic thin film according to claim 1, characterized in that the functional group showing reactivity to the functional group having active hydrogen is one selected from a group of functional groups represented by the following general formulas (1). 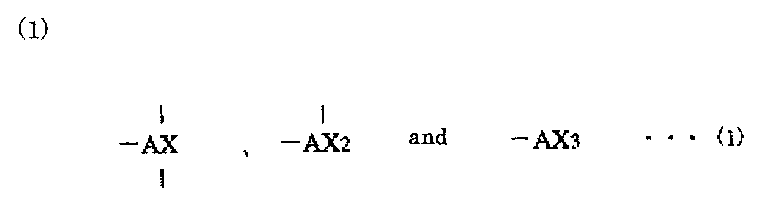 (In the formula, A shows one kind of atom selected from a group composed of silicon, germanium, tin, titanium and zirconium. X shows one functional group selected from halogen, alkoxy group and isocyanate group.)

3. The organic thin film according to claim 1, characterized in that the cleaning agent does not include a chlorine-based solvent.

4. The organic thin film according to claim 1, characterized in that a moisture content of the cleaning agent is less than 1%.

5. The organic thin film according to claim 2, characterized in that a functional group having active hydrogen exists on the surface of said base material.

6. The organic thin film according to claim 5, characterized in that said base material is composed of one selected from a group of glass, metal, metal oxide, resin, paper, fabric, timber and ceramics.

7. The organic thin film according to claim 1, characterized in that said organic thin film is a monomolecular film which is obtained in a manner that after the molecules are brought into contact with and bonded to the surface of said base material in dry atmosphere, the molecules are removed by the cleaning agent in dry atmosphere.

8. An organic thin film composed of molecules bonded onto a base material, characterized in that after said organic thin film is obtained so that molecules, which have one functional group selected from the functional groups represented by the following general formulas (1), are brought into contact with and bonded to a surface of said base material, the molecules which are not bonded onto said base material are removed by a cleaning agent containing at least one kind of ketone selected from a group of acetone, methyl ethyl ketone, diethyl ketone, methyl isobutyl ketone and acetylacetone. 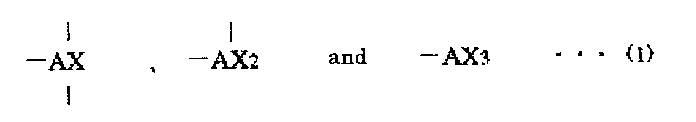 (In the equation, A shows one kind of atom selected from a group composed of silicon, germanium, tin, titanium and zirconium. X shows one functional group selected from halogen, alkoxy group and isocyanate group.)

9. An organic thin film composed of molecules bonded onto a base material, characterized in that said organic thin film is obtained so that after molecules, which have one functional group selected from the functional groups represented by the following general formulas (1), are brought into contact with and bonded to a surface of said base material, the molecules which are not bonded to said base material are removed by a cleaning agent containing at least one kind of alkylene glycol selected from a group of ethylene glycol, propylene glycol, butylene glycol, ethylene glycol monoethyl ether, diethylene glycol monoethyl ether, ethylene glycol monoethyl ether acetate, ethylene glycol monomethyl ether, ethylene glycol monomethyl ether acetate and ethylene glycol mono-n-butyl ether. 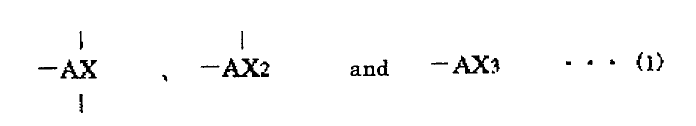 (In the equation, A shows one kind of atom selected from a group composed of silicon, germanium, tin, titanium and zirconium. X shows one functional group selected from halogen, alkoxy group and isocyanate group.)

10. An organic thin film composed of molecules bonded onto a base material, characterized in that said organic thin film is obtained so that after molecules, which has one functional group selected from the functional groups represented by the following general formulas (1), is brought into contact with and bonded to a surface of said base material, the molecules which are not bonded to said base material are removed by a cleaning agent containing at least one kind of alkylene glycol selected from a group of polyethylene glycol, polypropylene glycol, polybutylene glycol, polyethylene glycol monoethyl ether, polydiethylene glycol monoethyl ether, polyethylene glycol monoethyl ether acetate, polyethylene glycol monomethyl ether, polyethylene glycol monomethyl ether acetate and polyethylene glycol mono-n-butyl ether. 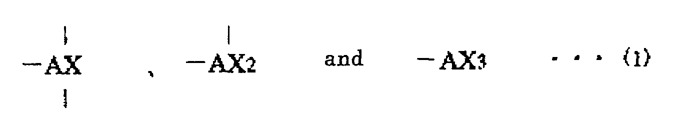 (In the equation, A shows one kind of atom selected from a group composed of silicon, germanium, tin, titanium and zirconium. X shows one functional group selected from halogen, alkoxy group and isocyanate group.)

11. The organic thin film according to claim 10, characterized in that a molecular weight of the alkylene glycol is within a range of not less than 100 to not more than 300.

12. An organic thin film composed of molecules bonded onto a base material, characterized in that said organic thin film is obtained so that after molecules, which have one functional group selected from the functional groups represented by the following general formulas (1), are brought into contact with and bonded to a surface of said base material, the molecules which are not bonded to said base material are removed by a cleaning agent containing at least one kind of alkoxy alcohol selected from a group of ethoxy ethanol and methoxy alcohol. 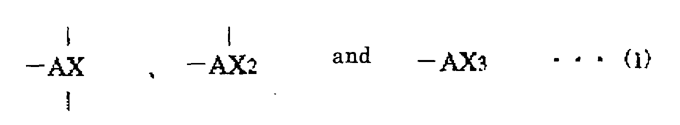 (In the equation, A shows one kind of atom selected from a group composed of silicon, germanium, tin, titanium and zirconium. X shows one functional group selected from halogen, alkoxy group and isocyanate group.)

13. An organic thin film manufacturing method, characterized by comprising:
the film forming step of bringing molecules having a functional group showing reactivity to a functional group having active hydrogen into contact with a base material so as to be bonded onto said base material, thereby to form a film composed of the molecules; and
the removing step of removing the molecules which are not bonded onto said base material with a cleaning agent which contains at least one selected from a group of ketone, alkylene glycol and alkoxy alcohol.

14. The organic thin film manufacturing method according to claim 13, characterized in that the molecules have one functional group selected from the functional groups represented by the following general formulas (1).
(In the equation, A shows one kind of atom selected from a group composed of silicon, germanium, tin, titanium and zirconium. X shows one kind of functional group selected from halogen, alkoxy group and 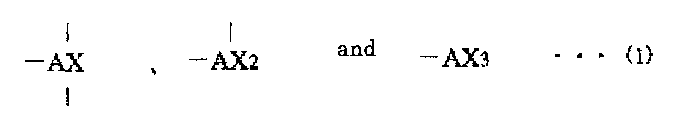 isocyanate group.)

15. The organic thin film manufacturing method according to claim 13, characterized in that the cleaning agent does not include a chlorine-based solvent.

16. The organic thin film manufacturing method according to claim 13, characterized in that a moisture content of the cleaning agent is less than 1%.

17. The organic thin film manufacturing method according to claim 13, characterized by comprising the cleaning agent removing step of removing the cleaning agent adhering to said base material after said removing step.

18. The organic thin film manufacturing method according to claim 17, characterized in that the cleaning agent removing step includes the rinse step of rinsing off the cleaning agent adhering to said base material with water, and the drying step of drying the water adhering to said base material.

19. The organic thin film manufacturing method according to claim 14, characterized in that a functional group having active hydrogen exists on the surface of said base material.

20. The organic thin film manufacturing method according to claim 19, characterized in that said base material is composed of one selected from a group of glass, metal, metal oxide, resin, paper, fiber, timber and ceramics.

21. The organic thin film manufacturing method according to claim 14, characterized in that the film forming step and the removing step are carried out in dry atmosphere.

22. The organic thin film manufacturing method according to claim 21, characterized in that an organic film is formed so that molecules having one functional group selected from the functional groups represented by the above general formulas (1) are bonded onto said base material into a monomolecular film shape.

23. An organic thin film manufacturing method, characterized by comprising:
the film forming step of bringing molecules having one functional group selected from the functional groups represented by the following general formulas (1) into contact with a base material so as to be bonded onto said base material, thereby to form a film composed of the molecules; and
the removing step of removing the molecules which are not bonded onto said base material using a cleaning agent containing at least one kind of ketone selected from a group of acetone, methyl ethyl ketone, diethyl ketone, methyl isobutyl ketone and acetylacetone. 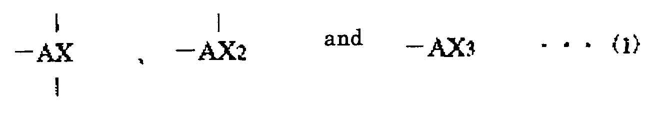 (In the equation, A shows one kind of atom selected from a group composed of silicon, germanium, tin, titanium and zirconium. X shows one functional group selected from halogen, alkoxy group and isocyanate group.)

24. An organic thin film manufacturing method, characterized by comprising:
the film forming step of bringing molecules having one functional group selected from the functional groups represented by the following general formulas (1) into contact with a base material so as to be bonded onto said base material, thereby to form a film composed of the molecules; and
the removing step of removing the molecules which are not bonded onto said base material using a cleaning agent containing at least one kind of alkylene glycol selected from a group of ethylene glycol, propylene glycol, butylene glycol, ethylene glycol monoethyl ether, diethylene glycol monoethyl ether, ethylene glycol monoethyl ether acetate, ethylene glycol monomethyl ether, ethylene glycol monomethyl ether acetate and ethylene glycol mono-n-butyl ether. 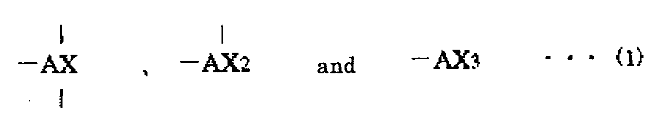 (In the equation, A shows one kind of atom selected from a group composed of silicon, germanium, tin, titanium and zirconium. X shows one functional group selected from halogen, alkoxy group and isocyanate group.)

25. An organic thin film manufacturing method, characterized by comprising:
the film forming step of bringing molecules having one functional group selected from the functional groups represented by the following general formulas (1) into contact with a base material so as to be bonded onto said base material, thereby to form a film composed of the molecules; and
the removing step of removing the molecules which are not bonded onto said base material using a cleaning agent containing at least one kind of alkylene glycol selected from a group of polyethylene glycol, polypropylene glycol, polybutylene glycol, polyethylene glycol monoethyl ether, polydiethylene glycol monoethyl ether, polyethylene glycol monoethyl ether acetate, polyethylene glycol monomethyl ether, polyethylene glycol monomethyl ether acetate and polyethylene glycol mono-n-butyl ether. 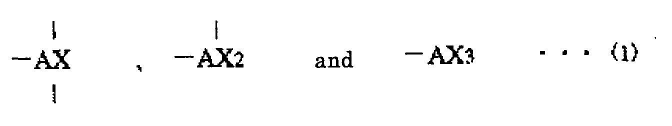 (In the equation, A shows one kind of atom selected from a group composed of silicon, germanium, tin, titanium and zirconium. X shows one functional group selected from halogen, alkoxy group and isocyanate group.)

26. The organic thin film manufacturing method according to claim 25, characterized in that a molecular weight of the alkylene glycol is within a range of not less than 100 to not more than 300.

27. An organic thin film manufacturing method, characterized by comprising:
the film forming step of bringing molecules having one functional group selected from the functional groups represented by the following general formulas (1) into contact with a base material so as to be bonded onto said base material, thereby to form a film composed of the molecules; and
the removing step of removing the molecules which are not bonded onto said base material using a cleaning agent containing at least one kind of alkoxy alcohol selected from a group of ethoxy ethanol and methoxy alcohol. 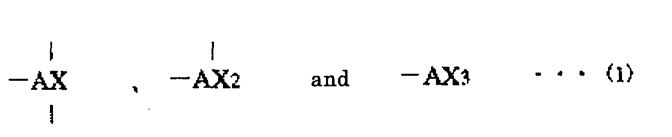 (In the equation, A shows one kind of atom selected from a group composed of silicon, germanium, tin, titanium and zirconium. X shows one functional group selected from halogen, alkoxy group and isocyanate group.)

28. An organic thin film manufacturing apparatus, characterized by comprising:
film forming means for bringing molecules having a functional group showing reactivity to a functional group having active hydrogen into contact with a base material so as to be bonded onto a surface of said base material and forming a film composed of the molecules; and
removing means for removing the molecules which are not bonded onto said base material using a cleaning agent containing at least one selected from a group of ketone, alkylene glycol and alkoxy alcohol.

29. The organic thin film manufacturing apparatus according to claim 28, characterized in that the molecules have one functional group selected from the functional groups represented by the following general formulas (1). 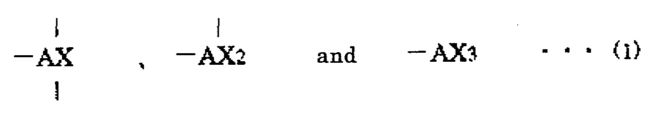 (In the equation, A shows one kind of atom selected from a group composed of silicon, germanium, tin, titanium and zirconium. X shows one functional group selected from halogen, alkoxy group and isocyanate group.)

30. The organic thin film manufacturing apparatus according to claim 28, characterized in that said organic thin film manufacturing apparatus is constituted so that said film forming means and said removing means are included in one closed system.

31. The organic thin film manufacturing apparatus according to claim 30, characterized by comprising air shielding means in which said film forming means and said removing means are installed so as to be capable of forming one closed system, said air shielding means controlling inner humidity so as to keep dry atmosphere.

32. The organic thin film manufacturing apparatus according to claim 28, characterized in that said film forming means and said removing means are provided separately and independently.

33. The organic thin film manufacturing apparatus according to claim 28, characterized in that the cleaning agent does not include a chlorine-based solvent.

34. The organic thin film manufacturing apparatus according to claim 28, characterized in that a moisture content of the cleaning agent is less than 1%.

35. The organic thin film manufacturing apparatus according to claim 28, characterized by comprising cleaning agent removing means for removing the cleaning agent adhering to said base material.

36. The organic thin film manufacturing apparatus according to claim 35, characterized in that said cleaning agent removing means is composed of rinse means of rinsing off the cleaning agent adhering to said base material with water, and drying means for drying and removing the water adhering to said base material.

37. An organic thin film manufacturing apparatus, characterized by comprising:
film forming means for bringing molecules having one functional group selected from the functional groups represented by the following general formulas (1) into contact with a base material so as to be bonded to a surface of said base material and forming a film composed of the molecules; and
removing means for removing the molecules which are not bonded to said base material using a cleaning agent containing at least one kind of ketone selected from a group of acetone, methyl ethyl ketone, diethyl ketone, methyl isobutyl ketone and acetylacetone. 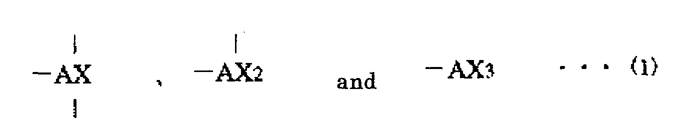 (In the equation, A shows one kind of atom selected from a group composed of silicon, germanium, tin, titanium and zirconium. X shows one functional group selected from halogen, alkoxy group and isocyanate group.)

38. An organic thin film manufacturing apparatus, characterized by comprising:
film forming means for bringing molecules having one functional group selected from the functional groups represented by the following general formulas (1) into contact with a base material so as to be bonded onto said base material and forming a film composed of the molecules; and
removing means for removing the molecules which are not bonded onto said base material using a cleaning agent containing at least one kind of alkylene glycol selected from a group of ethylene glycol, propylene glycol, butylene glycol, ethylene glycol monoethyl ether, diethylene glycol monoethyl ether, ethylene glycol monoethyl ether acetate, ethylene glycol monomethyl ether, ethylene glycol monomethyl ether acetate, ethylene glycol mono-n-butyl ether, polyethylene glycol, polypropylene glycol, polybutylene glycol, polyethylene glycol monoethyl ether, polydiethylene glycol monoethyl ether, polyethylene glycol monoethyl ether acetate, polyethylene glycol monomethyl ether, polyethylene glycol monomethyl ether acetate and polyethylene glycol mono-n-butyl ether.
(In the equation, A shows one kind of atom selected from a group 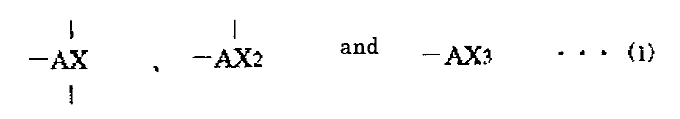 composed of silicon, germanium, tin, titanium and zirconium. X shows one functional group selected from halogen, alkoxy group and isocyanate group.)

39. An organic thin film manufacturing apparatus, characterized by comprising:
film forming means for bringing molecules having one functional group selected from the functional groups represented by the following general formulas (1) into contact with a base material so as to be bonded onto said base material and forming a film composed of the molecules; and
removing means for removing the molecules which are not bonded onto said base material using a cleaning agent containing at least one kind of alkoxy alcohol selected from a group of ethoxy ethanol and methoxy alcohol. 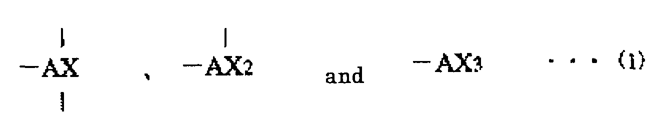 (In the equation, A shows one kind of atom selected from a group composed of silicon, germanium, tin, titanium and zirconium. X shows one functional group selected from halogen, alkoxy group and isocyanate group.)

40. A liquid crystal alignment film composed of molecules bonded onto a substrate, liquid crystal molecules being aligned in a specified direction, said liquid crystal alignment film, characterized in that said liquid crystal alignment film is obtained so that after molecules having a functional group showing reactivity to a functional group having active hydrogen are brought into contact with a surface of said substrate to be bonded thereto, the molecules which are not bonded to said substrate are removed by a cleaning agent containing at least one selected from a group of ketone, alkylene glycol and alkoxy alcohol.

41. The liquid crystal alignment film according to claim 40, characterized in that the functional group showing reactivity functional group having active hydrogen is one functional group selected from the functional groups represented by the following general formulas (1). 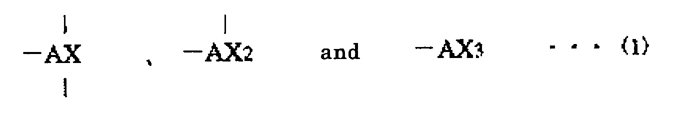 (In the equation, A shows one kind of atom selected from a group composed of silicon, germanium, tin, titanium and zirconium. X shows one functional group selected from halogen, alkoxy group and isocyanate group.)

42. The liquid crystal alignment film according to claim 40, characterized in that the cleaning agent does not include a chlorine-based solvent.

43. The liquid crystal alignment film according to claim 40, characterized in that a moisture content of the cleaning agent is less than 1%.

44. The liquid crystal alignment film according to claim 41, characterized in that a functional group having active hydrogen exists on the surface of said substrate.

45. The liquid crystal alignment film according to claim 40, characterized in that said liquid crystal alignment film is a monomolecular film which is obtained so that after the molecules are brought into contact with the surface of said substrate to be bonded thereto in dry atmosphere, the molecules are removed by the cleaning agent in dry atmosphere.

46. A liquid crystal alignment film composed of molecules bonded onto a substrate, liquid crystal molecules being aligned in a specified direction, said liquid crystal alignment film, characterized in that said liquid crystal alignment film is obtained so that after molecules having one functional group selected from the functional groups represented by the following general formulas (1) are brought into contact with a surface of said substrate to be bonded thereto, the molecules which are not bonded to said substrate are removed by a cleaning agent containing at least one kind of ketone selected from a group of acetone, methyl ethyl ketone, diethyl ketone, methyl isobutyl ketone and acetylacetone. 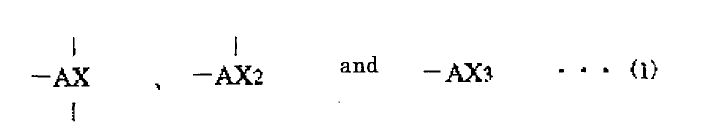 (In the equation, A shows one kind of atom selected from a group composed of silicon, germanium, tin, titanium and zirconium. X shows one functional group selected from halogen, alkoxy group and isocyanate group.)

47. A liquid crystal alignment film composed of molecules bonded onto a substrate, liquid crystal molecules being aligned in a specified direction, said liquid crystal alignment film, characterized in that said liquid crystal alignment film is obtained so that after molecules having one functional group selected from the functional groups represented by the following general formulas (1) are brought into contact with a surface of said substrate to be bonded thereto, the molecules which are not bonded to said substrate are removed by a cleaning agent containing at least one kind of alkylene glycol selected from a group of ethylene glycol, propylene glycol, butylene glycol, ethylene glycol monoethyl ether, diethylene glycol monoethyl ether, ethylene glycol monoethyl ether acetate, ethylene glycol monomethyl ether, ethylene glycol monomethyl ether acetate and ethylene glycol mono-n-butyl ether. 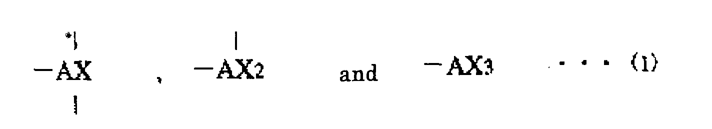 (In the equation, A shows one kind of atom selected from a group composed of silicon, germanium, tin, titanium and zirconium. X shows one functional group selected from halogen, alkoxy group and isocyanate group.)

48. A liquid crystal alignment film composed of molecules bonded onto a substrate, liquid crystal molecules being aligned in a specified direction, said liquid crystal alignment film, characterized in that said liquid crystal alignment film is obtained so that after molecules having one functional group selected from the functional groups represented by the following general formulas (1) are brought into contact with a surface of said substrate to be bonded thereto, the molecules which are not bonded to said substrate are removed by a cleaning agent containing at least one kind of alkylene glycol selected from a group of polyethylene glycol, polypropylene glycol, polybutylene glycol, polyethylene glycol monoethyl ether, polydiethylene glycol monoethyl ether, polyethylene glycol monoethyl ether acetate, polyethylene glycol monomethyl ether, polyethylene glycol monomethyl ether acetate and polyethylene glycol mono-n-butyl ether. 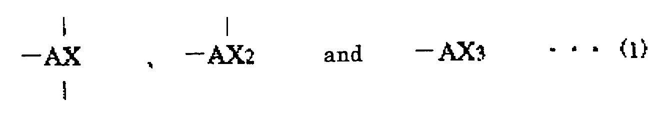 (In the equation, A shows one kind of atom selected from a group composed of silicon, germanium, tin, titanium and zirconium. X shows one functional group selected from halogen, alkoxy group and isocyanate group.)

49. The liquid crystal alignment film according to claim 48, characterized in that a molecular weight of the alkylene glycol is within a range of not less than 100 to not more than 300.

50. A liquid crystal alignment film composed of molecules bonded onto a substrate, liquid crystal molecules being aligned in a specified direction, said liquid crystal alignment film, characterized in that said liquid crystal alignment film is obtained so that after molecules having one functional group selected from the functional groups represented by the following general formulas (1) are brought into contact with a surface of said substrate to be bonded thereto, the molecules which are not bonded to said substrate are removed by a cleaning agent containing at least one kind of alkoxy alcohol selected from a group of ethoxy ethanol and methoxy alcohol.
(In the equation, A shows one kind of atom selected from a group composed of silicon, germanium, tin, titanium and zirconium. X shows one functional group selected from halogen, alkoxy group and isocyanate group.)

51. A liquid crystal alignment film manufacturing method, said liquid crystal alignment film being composed of molecules bonded onto a surface of a substrate, liquid crystal molecules being aligned in a specified direction, said method characterized by comprising:
film forming step of bringing molecules having a functional group showing reactivity to a functional group having active hydrogen into contact with said substrate to be bonded onto a surface of said substrate and forming a film composed of the molecules; and
removing step of removing the molecules which are not bonded to said substrate using a cleaning agent containing at least one selected from a group of ketone, alkylene glycol and alkoxy alcohol.

52. The liquid crystal alignment film manufacturing method according to claim 51, characterized in that the molecules have one functional group selected from the functional groups represented by the following formulas (1). 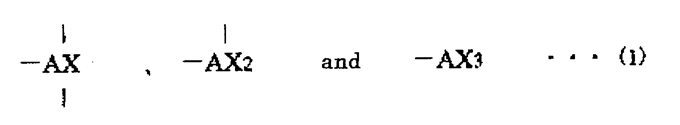 (In the equation, A shows one kind of atom selected from a group composed of silicon, germanium, tin, titanium and zirconium. X shows one functional group selected from halogen, alkoxy group and isocyanate group.)

53. The liquid crystal alignment film manufacturing method according to claim 51, characterized in that the cleaning agent does not include a chlorine-based solvent.

54. The liquid crystal alignment film manufacturing method according to claim 51, characterized in that a moisture content of the cleaning agent is less than 1%.

55. The liquid crystal alignment film manufacturing method according to claim 51, characterized by further comprising cleaning agent removing step of removing the cleaning agent adhering to said substrate after the removing step.

56. The liquid crystal alignment film manufacturing method according to claim 55, characterized in that the cleaning agent removing step includes rinse step of rinsing off the cleaning agent adhering to said substrate with water, and drying step of drying the water adhering to said substrate.

57. The liquid crystal alignment film manufacturing method according to claim 52, characterized in that a functional group having active hydrogen exists on the surface of said substrate.

58. The liquid crystal alignment film manufacturing method according to claim 52, characterized in that the film forming step and removing step are carried out in dry atmosphere.

59. The liquid crystal alignment film manufacturing method according to claim 58, characterized in that a liquid crystal alignment film is formed so that the molecules having one functional group selected from the functional groups represented by the above general formulas (1) are bonded onto said substrate into a monomolecular film shape.

60. A liquid crystal alignment film manufacturing method, said liquid crystal alignment film being composed of molecules bonded onto a surface of a substrate, liquid crystal molecules being aligned in a specified direction, said method characterized by comprising:
film forming step of bringing molecules having one functional group selected from the functional groups represented by the following general formulas (1) into contact with said substrate to be bonded onto said substrate and forming a film composed of the molecules; and
removing step of removing the molecules which are not bonded to said substrate using a cleaning agent containing at least one kind of ketone selected from a group of acetone, methyl ethyl ketone, diethyl ketone, methyl isobutyl ketone and acetylacetone. 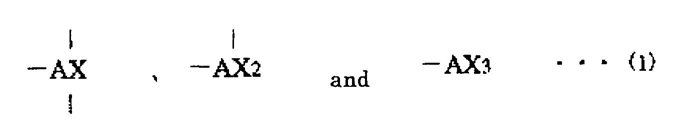 (In the equation, A shows one kind of atom selected from a group composed of silicon, germanium, tin, titanium and zirconium. X shows one functional group selected from halogen, alkoxy group and isocyanate group.)

61. A liquid crystal alignment film manufacturing method, said liquid crystal alignment film being composed of molecules bonded onto a surface of a substrate, liquid crystal molecules being aligned in a specified direction, said method characterized by comprising:
film forming step of bringing molecules group having one functional group selected from the functional groups represented by the following general formulas (1) into contact with said substrate to be bonded onto said substrate and forming a film composed of the molecules; and
removing step of removing the molecules which are not bonded to said substrate using a cleaning agent containing at least one kind of alkylene glycol selected from a group of ethylene glycol, propylene glycol, butylene glycol, ethylene glycol monoethyl ether, diethylene glycol monoethyl ether, ethylene glycol monoethyl ether acetate, ethylene glycol monomethyl ether, ethylene glycol monomethyl ether acetate and ethylene glycol mono-n-butyl ether. 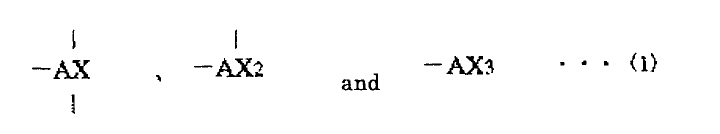 (In the equation, A shows one kind of atom selected from a group composed of silicon, germanium, tin, titanium and zirconium. X shows one functional group selected from halogen, alkoxy group and isocyanate group.)

62. A liquid crystal alignment film manufacturing method, said liquid crystal alignment film being composed of molecules bonded onto a surface of a substrate, liquid crystal molecules being aligned in a specified direction, said method characterized by comprising:
film forming step of bringing molecules having one functional group selected from the functional groups represented by the following general formulas (1) into contact with said substrate to be bonded onto said substrate and forming a film composed of the molecules; and
removing step of removing the molecules which are not bonded to said substrate using a cleaning agent containing at least one kind of alkylene glycol selected from a group of polyethylene glycol, polypropylene glycol, polybutylene glycol, polyethylene glycol monoethyl ether, polydiethylene glycol monoethyl ether, polyethylene glycol monoethyl ether acetate, polyethylene glycol monomethyl ether, polyethylene glycol monomethyl ether acetate and polyethylene glycol mono-n-butyl ether. 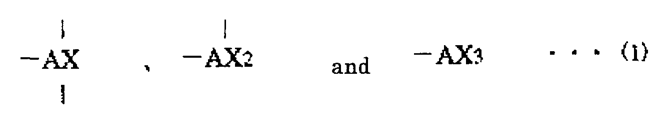 (In the equation, A shows one kind of atom selected from a group composed of silicon, germanium, tin, titanium and zirconium. X shows one functional group selected from halogen, alkoxy group and isocyanate group.)

63. The liquid crystal alignment film manufacturing method according to claim 62, characterized in that a molecular weight of the alkylene glycol is within a range of not less than 100 to not more than 300.

64. A liquid crystal alignment film manufacturing method, said liquid crystal alignment film being composed of molecules bonded onto a surface of a substrate, liquid crystal molecules being aligned in a specified direction, said method characterized by comprising:
film forming step of bringing molecules having one functional group selected from the functional groups represented by the following general formulas (1) into contact with said substrate to be bonded onto said substrate and forming a film composed of the molecules; and
removing step of removing the molecules which are not bonded to said substrate using a cleaning agent containing at least one kind of alkoxy alcohol selected from a group of ethoxy ethanol and methoxy alcohol. 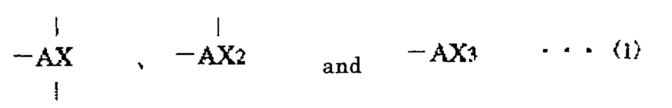 (In the equation, A shows one kind of atom selected from a group composed of silicon, germanium, tin, titanium and zirconium. X shows one functional group selected from halogen, alkoxy group and isocyanate group.)

65. A liquid crystal alignment film manufacturing apparatus, characterized by comprising:
film forming means for bringing molecules having a functional group showing reactivity to a functional group having active hydrogen into contact with a substrate to be bonded to a surface of said substrate and forming a film composed of the molecules; and
removing means for removing the molecules which are not bonded to said substrate using a cleaning agent containing at least one selected from a group of ketone, alkylene glycol and alkoxy alcohol.

66. The liquid crystal alignment film manufacturing apparatus according to claim 65, characterized in that the molecules have one functional group selected from the functional groups represented by the following general formulas (1). 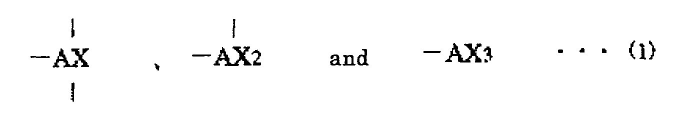 (In the equation, A shows one kind of atom selected from a group composed of silicon, germanium, tin, titanium and zirconium. X shows one functional group selected from halogen, alkoxy group and isocyanate group.)

67. The liquid crystal alignment film manufacturing apparatus according to claim 65, characterized in that said liquid crystal alignment film manufacturing apparatus is constituted so that said film forming means and said removing means are included in one closed system.

68. The liquid crystal alignment film manufacturing apparatus according to claim 67, characterized by comprising air shielding means in which said film forming means and said removing means are installed so as to be capable of forming one closed system, said air shielding means controlling inner humidity so as to keep dry atmosphere.

69. The liquid crystal alignment film manufacturing apparatus according to claim 65, characterized in that said film forming means and said removing means are provided separately and independently.

70. The liquid crystal alignment film manufacturing apparatus according to claim 65, characterized in that the cleaning agent does not include a chlorine-based solvent.

71. The liquid crystal alignment film manufacturing apparatus according to claim 65, characterized in that a moisture content of the cleaning agent is less than 1%.

72. The liquid crystal alignment film manufacturing apparatus according to claim 65, characterized by comprising cleaning agent removing means for removing the cleaning agent adhering to said substrate.

73. The liquid crystal alignment film manufacturing apparatus according to claim 72, characterized in that said cleaning agent removing means is composed of rinse means for rinsing off the cleaning agent adhering to said substrate with water, and drying means for drying and removing the water adhering to said substrate.

74. A liquid crystal alignment film manufacturing apparatus, characterized by comprising:
film forming means for bringing molecules having a functional group having one functional group selected from the functional groups represented by the following general formulas (1) into contact with a substrate to be bonded to a surface of said substrate and forming a film composed of the molecules; and
removing means for removing the molecules which are not bonded to said substrate using a cleaning agent containing at least one kind of ketone selected from a group of acetone, methyl ethyl ketone, diethyl ketone, methyl isobutyl ketone and acetylacetone. 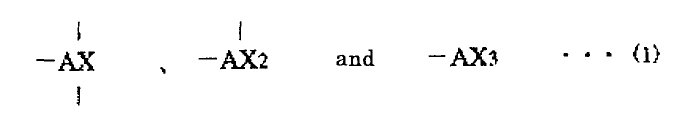 (In the equation, A shows one kind of atom selected from a group composed of silicon, germanium, tin, titanium and zirconium. X shows one functional group selected from halogen, alkoxy group and isocyanate group.)

75. A liquid crystal alignment film manufacturing apparatus, characterized by comprising:
film forming means for bringing molecules having a functional group having one functional group selected from the functional groups represented by the following general formulas (1) into contact with a substrate to be bonded to a surface of said substrate and forming a film composed of the molecules; and
removing means for removing the molecules which are not bonded to said substrate using a cleaning agent containing at least one kind of alkylene glycol selected from a group of ethylene glycol, propylene glycol, butylene glycol, ethylene glycol monoethyl ether, diethylene glycol monoethyl ether, ethylene glycol monoethyl ether acetate, ethylene glycol monomethyl ether, ethylene glycol monomethyl ether acetate, ethylene glycol mono-n-butyl ether, polyethylene glycol, polypropylene glycol, polybutylene glycol, polyethylene glycol monoethyl ether, polydiethylene glycol monoethyl ether, polyethylene glycol monoethyl ether acetate, polyethylene glycol monomethyl ether, polyethylene glycol monomethyl ether acetate and polyethylene glycol mono-n-butyl ether. 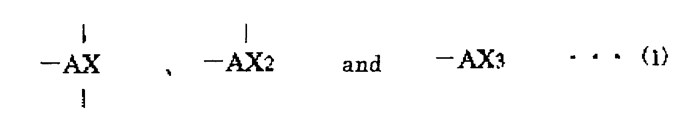 (In the equation, A shows one kind of atom selected from a group composed of silicon, germanium, tin, titanium and zirconium. X shows one functional group selected from halogen, alkoxy group and isocyanate group.)

76. A liquid crystal alignment film manufacturing apparatus, characterized by comprising:
film forming means for bringing molecules having a functional group having one functional group selected from the functional groups represented by the following general formulas (1) into contact with a substrate to be bonded to a surface of said substrate and forming a film composed of the molecules; and
removing means for removing the molecules which are not bonded to said substrate using a cleaning agent containing at least one kind of alkoxy alcohol selected from a group of ethoxy ethanol and methoxy alcohol. 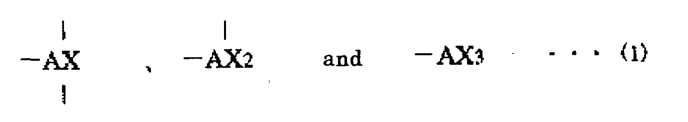 (In the equation, A shows one kind of atom selected from a group composed of silicon, germanium, tin, titanium and zirconium. X shows one functional group selected from halogen, alkoxy group and isocyanate group.)

77. A liquid crystal display device having a liquid crystal alignment film on a substrate, said liquid crystal alignment film being constituted so that liquid crystal molecules are aligned in a predetermined direction, said display device, characterized in that:
said liquid crystal alignment film is a thin film which is constituted so that molecules having a functional group showing reactivity to a functional group having active hydrogen is bonded onto said substrate, and
after a group of the molecules are brought into contact with to be bonded to said substrate, the molecules which are not bonded to said substrate are removed by a cleaning agent containing at least one selected from a group of ketone, alkylene glycol and alkoxy alcohol.

78. The liquid crystal display device according to claim 77, characterized in that the a functional group showing reactivity to a functional group having active hydrogen is one functional group selected from the functional groups represented by the following general formulas (1). 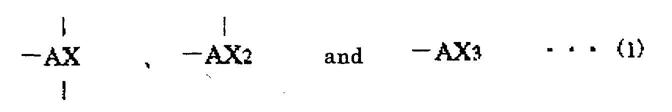 (In the equation, A shows one kind of atom selected from a group composed of silicon, germanium, tin, titanium and zirconium. X shows one functional group selected from halogen, alkoxy group and isocyanate group.)

79. The liquid crystal display device according to claim 77, characterized in that the cleaning agent does not include a chlorine-based solvent.

80. The liquid crystal display device according to claim 77, characterized in that a moisture content of the cleaning agent is less than 1%.

81. The liquid crystal display device according to claim 78, characterized in that a functional group having active hydrogen exists on the surface of said substrate.

82. The liquid crystal display device according to claim 77, characterized in that said liquid crystal alignment film is a monomolecular film which is obtained so that the molecules are brought into contact with said substrate to be bonded thereto in dry atmosphere, and are removed by the cleaning agent in dry atmosphere.

83. A liquid crystal display device having a liquid crystal alignment film on a substrate, said liquid crystal alignment film being constituted so that liquid crystal molecules are aligned in a predetermined direction, said display device, characterized in that said liquid crystal alignment film is obtained so that after molecules having one functional group selected from the functional groups represented by the following general formulas (1) are brought into contact with a surface of said substrate to be bonded thereto, the molecules which are not bonded to said substrate are removed by a cleaning agent containing at least one kind of ketone selected from a group of acetone, methyl ethyl ketone, diethyl ketone, methyl isobutyl ketone and acetylacetone. 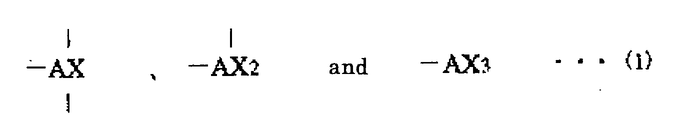 (In the equation, A shows one kind of atom selected from a group composed of silicon, germanium, tin, titanium and zirconium. X shows one functional group selected from halogen, alkoxy group and isocyanate group.)

84. A liquid crystal display device having a liquid crystal alignment film on a substrate, said liquid crystal alignment film being constituted so that liquid crystal molecules are aligned in a predetermined direction, said display device, characterized in that said liquid crystal alignment film is obtained so that after molecules having one functional group selected from the functional groups represented by the following general formulas (1) are brought into contact with a surface of said substrate to be bonded thereto, the molecules which are not bonded to said substrate are removed by a cleaning agent containing at least one kind of alkylene glycol selected from a group of ethylene glycol, propylene glycol, butylene glycol, ethylene glycol monoethyl ether, diethylene glycol monoethyl ether, ethylene glycol monoethyl ether acetate, ethylene glycol monomethyl ether, ethylene glycol monomethyl ether acetate and ethylene glycol mono-n-butyl ether. 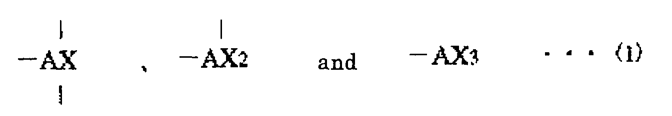 (In the equation, A shows one kind of atom selected from a group composed of silicon, germanium, tin, titanium and zirconium. X shows one functional group selected from halogen, alkoxy group and isocyanate group.)

85. A liquid crystal display device having a liquid crystal alignment film, said liquid crystal alignment film being constituted so that liquid crystal molecules are aligned in a predetermined direction, said display device, characterized in that said liquid crystal alignment film is obtained so that after molecules having one functional group selected from the functional groups represented by the following general formulas (1) is brought into contact with a surface of said substrate to be bonded thereto, the molecules which are not bonded to said substrate are removed by a cleaning agent containing at least one kind of alkylene glycol selected from a group of polyethylene glycol, polypropylene glycol, polybutylene glycol, polyethylene glycol monoethyl ether, polydiethylene glycol monoethyl ether, polyethylene glycol monoethyl ether acetate, polyethylene glycol monomethyl ether, polyethylene glycol monomethyl ether acetate and polyethylene glycol mono-n-butyl ether. 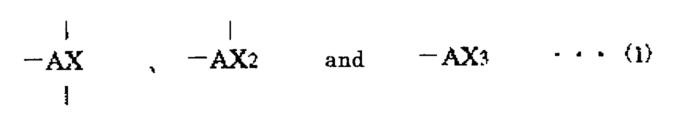 (In the equation, A shows one kind of atom selected from a group composed of silicon, germanium, tin, titanium and zirconium. X shows one functional group selected from halogen, alkoxy group and isocyanate group.)

86. The liquid crystal display device according to claim 85, characterized in that a molecular weight of the alkylene glycol is within a range of not less than 100 to not more than 300.

87. A liquid crystal display device having a liquid crystal alignment film on a substrate, said liquid crystal alignment film being constituted so that liquid crystal molecules are aligned in a predetermined direction, said display device, characterized in that said liquid crystal alignment film is obtained so that after molecules having one functional group selected from the functional groups represented by the following general formulas (1) are brought into contact with a surface of said substrate to be bonded thereto, the molecules which are not bonded to said substrate are removed by a cleaning agent containing at least one kind of alkoxy alcohol selected from a group of ethoxy ethanol and methoxy alcohol. 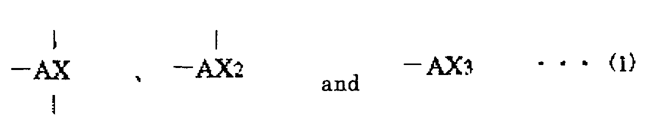 (In the equation, A shows one kind of atom selected from a group composed of silicon, germanium, tin, titanium and zirconium. X shows one functional group selected from halogen, alkoxy group and isocyanate group.)

88. A liquid crystal display device with liquid crystal alignment film manufacturing method, said liquid crystal alignment film being constituted so as to include molecules bonded onto a surface of a substrate and so that liquid crystal molecules being aligned in a specified direction, said method characterized by comprising:
film forming step of bringing molecules having a functional group showing reactivity to a functional group having active hydrogen into contact with said substrate to be bonded onto a surface of said substrate and forming a film composed of the molecules; and
removing step of removing the molecules which are not bonded to said substrate using a cleaning agent containing at least one selected from a group of ketone, alkylene glycol and alkoxy alcohol.

89. The liquid crystal display device manufacturing method according to claim 88, characterized in that the molecules have one functional group selected from the functional groups represented by the following formulas (1). 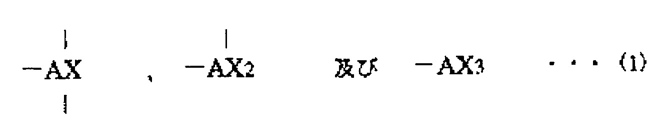 (In the equation, A shows one kind of atom selected from a group composed of silicon, germanium, tin, titanium and zirconium. X shows one functional group selected from halogen, alkoxy group and isocyanate group.)

90. The liquid crystal display device manufacturing method according to claim 88, characterized in that the cleaning agent does not include a chlorine-based solvent.

91. The liquid crystal display device manufacturing method according to claim 88, characterized in that a moisture content of the cleaning agent is less than 1%.

92. The liquid crystal display device manufacturing method according to claim 88, characterized by further comprising cleaning agent removing step of removing the cleaning agent adhering to said substrate after the removing step.

93. The liquid crystal display device manufacturing method according to claim 92, characterized in that the cleaning agent removing step includes rinse step of rinsing off the cleaning agent adhering to said substrate with water, and drying step of drying the water adhering to said substrate.

94. The liquid crystal display device manufacturing method according to claim 89, characterized in that a functional group having active hydrogen exists on the surface of said substrate.

95. The liquid crystal display device manufacturing method according to claim 89, characterized in that the film forming step and removing step are carried out in dry atmosphere.

96. The liquid crystal display device manufacturing method according to claim 95, characterized in that a liquid crystal alignment film is formed so that the molecules having one functional group selected from the functional groups represented by the above general formulas (1) are bonded onto said substrate into a monomolecular film shape.

97. A liquid crystal display device with liquid crystal alignment film manufacturing method, said liquid crystal alignment film being constituted so as to include molecules bonded onto a surface of a substrate and so that liquid crystal molecules being aligned in a specified direction, said method characterized by comprising:
film forming step of bringing molecules having one functional group selected from the functional groups represented by the following general formulas (1) into contact with said substrate to be bonded onto said substrate and forming a film composed of the molecules; and
removing step of removing the molecules which are not bonded to said substrate using a cleaning agent containing at least one kind of ketone selected from a group of acetone, methyl ethyl ketone, diethyl ketone, methyl isobutyl ketone and acetylacetone. 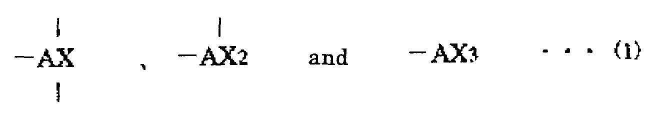 (In the equation, A shows one kind of atom selected from a group composed of silicon, germanium, tin, titanium and zirconium. X shows one functional group selected from halogen, alkoxy group and isocyanate group.)

98. A liquid crystal display device with liquid crystal alignment film manufacturing method, said liquid crystal alignment film being constituted so as to include molecules bonded onto a surface of a substrate and so that liquid crystal molecules being aligned in a specified direction, said method characterized by comprising:
film forming step of bringing molecules having one functional group selected from the functional groups represented by the following general formulas (1) into contact with said substrate to be bonded onto said substrate and forming a film composed of the molecules; and
removing step of removing the molecules which are not bonded to said substrate using a cleaning agent containing at least one kind of alkylene glycol selected from a group of ethylene glycol, propylene glycol, butylene glycol, ethylene glycol monoethyl ether, diethylene glycol monoethyl ether, ethylene glycol monoethyl ether acetate, ethylene glycol monomethyl ether, ethylene glycol monomethyl ether acetate and ethylene glycol mono-n-butyl ether. 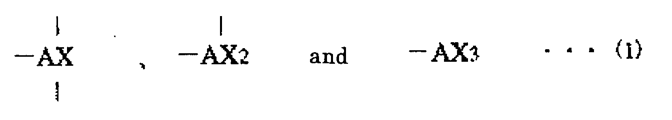 (In the equation, A shows one kind of atom selected from a group composed of silicon, germanium, tin, titanium and zirconium. X shows one functional group selected from halogen, alkoxy group and isocyanate group.)

99. A liquid crystal display device with liquid crystal alignment film manufacturing method, said liquid crystal alignment film being constituted so as to include molecules bonded onto a surface of a substrate and so that liquid crystal molecules being aligned in a specified direction, said method characterized by comprising:
film forming step of bringing molecules having one functional group selected from the functional groups represented by the following general formulas (1) into contact with said substrate to be bonded onto said substrate and forming a film composed of the molecules; and
removing step of removing the molecules which are not bonded to said substrate using a cleaning agent containing at least one kind of alkylene glycol selected from a group of polyethylene glycol, polypropylene glycol, polybutylene glycol, polyethylene glycol monoethyl ether, polydiethylene glycol monoethyl ether, polyethylene glycol monoethyl ether acetate, polyethylene glycol monomethyl ether, polyethylene glycol monomethyl ether acetate and polyethylene glycol mono-n-butyl ether. 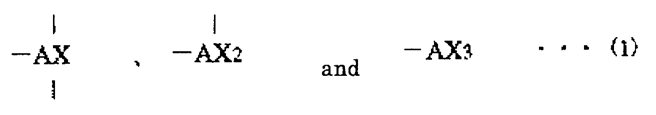 (In the equation, A shows one kind of atom selected from a group composed of silicon, germanium, tin, titanium and zirconium. X shows one functional group selected from halogen, alkoxy group and isocyanate group.)

100. The liquid crystal display device manufacturing method according to claim 99, characterized in that a molecular weight of the alkylene glycol is within a range of not less than 100 to not more than 300.

101. A liquid crystal display device with liquid crystal alignment film manufacturing method, said liquid crystal alignment film being constituted so as to include molecules bonded onto a surface of a substrate and so that liquid crystal molecules being aligned in a specified direction, said method characterized by comprising:
film forming step of bringing molecules having one functional group selected from the functional groups represented by the following general formulas (1) into contact with said substrate to be bonded onto said substrate and forming a film composed of the molecules; and
removing step of removing the molecules which are not bonded to said substrate using a cleaning agent containing at least one kind of alkoxy alcohol selected from a group of ethoxy ethanol and methoxy alcohol. 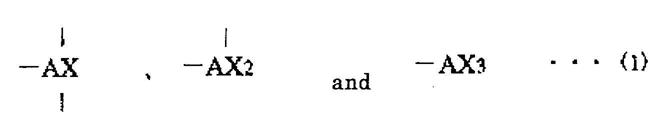 (In the equation, A shows one kind of atom selected from a group composed of silicon, germanium, tin, titanium and zirconium. X shows one functional group selected from halogen, alkoxy group and isocyanate group.)
